# EUROPÄISCHE PATENTSCHRIFT

(11) **EP 3 856 649 B1**
(45) Veröffentlichungstag und Bekanntmachung des Hinweises auf die Patenterteilung: **23.03.2022**
(21) Anmeldenummer: 19831649.9
(22) Anmeldetag: 16.12.2019
(51) Int. Cl.: B65D 3/22, B65D 65/46

(54) **BECHER AUS REIN PFLANZLICHEN MATERIALIEN**
CUP MADE OF PURE VEGETABLE MATERIAL
GOBELET EN MATIÈRES VÉGÉTALES PURS

(30) Priorität: 14.12.2018 DE 102018221810; 15.01.2019 DE 102019200385
(43) Veröffentlichungstag der Anmeldung: 04.08.2021
(73) Patentinhaber: Hope Tree International GmbH, 83607 Holzkirchen (DE)
(72) Erfinder: DINZINGER, Lambert Dustin, 82538 Geretsried-Gelting (DE)
(74) Vertreter: Grund, Martin
(86) Internationale Anmeldenummer: PCT/EP2019/085435
(87) Internationale Veröffentlichungsnummer: WO 2020/120803

(56) Entgegenhaltungen:
- EP-A1- 2 147 871
- EP-A1- 3 278 972
- DE-A1-102007 024 254
- DE-C- 869 014
- DE-U1- 8 700 831

## Beschreibung

### Gebiet der Erfindung

Die vorliegende Erfindung liegt auf dem Gebiet der Becher, Schalen und Behälter, vorzugsweise Getränkebecher, sowie der Herstellung solcher Becher, Schalen und Behälter, nachfolgend generell als Becher bezeichnet. Unter Verwendung von Cellulosehydrat, auch bekannt als Cellophan, oder Cellulosehydrat und einem Pappe oder Faser/Zellstoff-Stärke-Mix können in Kombination mit einem Primer biologisch abbaubare Becher in transparenter, halb-transparenter oder opaker Ausführungsform hergestellt werden. In ähnlicher Weise können unter Verwendung von Naturkautschuk oder pflanzlichen Wachsen biologisch abbaubare Becher in transparenter, halb-transparenter oder opaker Ausführungsform hergestellt werden. Durch die Zugabe von Lebensmittelfarbe können auch farbige Becher hergestellt werden. Die vorliegende Erfindung verwendet die gleichen Materialien auch zur Herstellung von Deckeln für Becher.

### Hintergrund der Erfindung

Allein in Deutschland werden täglich pro Stunde mehrere hunderttausend Getränkebecher verbraucht. Immer wieder landen diese nach Gebrauch - im Schnitt gerade einmal 15 Minuten - achtlos weggeworfen auf öffentlichen Plätzen, Straßen, in der Natur oder im Meer. Da gebräuchliche Einweg-Getränkebecher weder recycle-, noch kompostierbar sind, können sie nur verbrannt oder unter enormem Kosten- und Energieaufwand verwertet werden und schaden so dem Erhalt unseres Ökosystems.

Dennoch erfreuen sich Einweg-Getränkebecher weltweit großer Beliebtheit, da sie einfach zu verwenden, praktisch und hygienisch sind. Infolgedessen ist der Bedarf an einer umweltfreundlichen, recycel- und kompostierbaren Alternative zu herkömmlichen Getränkebechern enorm gross. Bekannte Lösungen, wie durch EP 3 278 972 A1 oder DE 10 2007 024254 A1 offenbart, sucht die vorliegende Erfindung weiter zu verbessern.

### Zusammenfassung der Erfindung

vorstehend ausgeführt, bezieht sich die Erfindung auf Becher und Behälter. vorzugsweise Getränkebecher, die nachfolgend generell als Becher bezeichnet werden. Während herkömmliche Becher aus Plastik oder aber mit Plastik oder Wachs beschichtetem Papier bestehen, bestehen Becher der vorliegenden Erfindung aus rein pflanzlichen Materialien, wie Cellulosehydrat und Pappe oder Faser/Zellstoff-Stärke-Mix, sowie nicht-vulkanisiertem Naturkautschuk oder pflanzlichem Wachs und einem

Die Becher sind somit nicht nur leicht zu recyceln bzw. zu kompostieren, sie werden auch aus nachwachsenden Rohstoffen produziert, die eine positive CO₂-Bilanz aufweisen. Aufgrund des Gehalts an pflanzlicher Stärke können die Becher sogar als Pflanzendünger verwendet werden oder als Fischfutter dienen, sollten sie einmal ins Meer gelangen. Daher bilden die Becher der vorliegenden Erfindung eine sehr gute, umweltfreundliche und umweltbewusste Alternative zu gebräuchlichen Einweg-Getränkebechern.

Ein weiterer Vorteil der vorliegenden Erfindung ist, dass aus Cellulosehydrat auch volltransparente Becher hergestellt werden können.

### Becher-Variante 1

Die vorliegende Erfindung bezieht sich auf einen Becher, umfassend einen Boden (1) und eine Seitenwand (2), wobei die Seitenwand (2) eine erste Schicht (5) umfasst, wobei die erste Schicht (5) aus Cellulosehydrat besteht, wobei die erste Schicht mit einem Primermaterial (4) beschichtet ist.

In manchen Ausführungsformen umfasst das Primermaterial (4) Pflanzenmaterial und Wasser, bevorzugt aus Pflanzen gewonnene Stärke und Wasser. In manchen dieser Ausführungsformen umfasst das Primermaterial (4) Gummi arabicum, und/oder Kartoffelstärke, Maisstärke oder Tapiokastärke; oder Stärke aus Maniok, Knollenbohne, Batate, Yamswurzel, Knollen-Platterbse, Arakacha, Knolligem Sauerklee, Knolliger Kapuzinerkresse, Ulluco, Ostindischer Pfeilwurz, Pfeilwurz, Achira, Taro, Tannia, Weißer Seerose, Gelber Teichrose oder Chayote. In bevorzugten Ausführungsformen umfasst das Primermaterial (4) Gummi arabicum und Stärke, vorzugsweise Kartoffelstärke oder Maisstärke. In besonders bevorzugten Ausführungsformen umfasst das Primermaterial zusätzlich Wasser.

Erfindungsgemäss umfasst die Seitenwand (2) des Bechers außerdem eine zweite Schicht (3), wobei die zweite Schicht (3) Cellulosehydrat, Papier, Pappe, Zellstoff, Faserstoff, Stärke oder eine Mischung davon umfasst, wobei die erste Schicht (5) und die zweite Schicht (3) durch das Primermaterial (4) verbunden sind. In einer Ausführungsform umfasst die zweite Schicht (3) Zellstoff und/oder Faserstoff und außerdem Magnesiumstearat. In bevorzugten Ausführungsformen ist die zweite Schicht (3) zumindest teilweise aus Baobab-Pflanzenmaterial hergestellt. In besonders bevorzugten Ausführungsformen umfasst das zweite Material Baobab-Pflanzenmaterial und das Primermaterial Gummi arabicum und Stärke, wobei die Stärke vorzugsweise Kartoffelstärke oder Maisstärke ist.

In manchen Ausführungsformen umfasst der Boden (1) Cellulosehydrat. In bevorzugten Ausführungsformen besteht der Boden (1) des Bechers aus dem gleichen Material wie die Seitenwand (2) des Bechers.

In manchen Ausführungsformen umfasst der Becher mindestens ein Sichtfenster (6) oder ist vollständig transparent.

Erfindungsgemäss ist die erste Schicht (5) die innere Schicht des Bechers ist und die zweite Schicht (3) die äußere Schicht des Bechers.

Die Becher der vorliegenden Erfindung sind recyclebar, kompostierbar und/oder vollständig biologisch abbaubar.

### Becher-Variante 2

Als Alternative zu den bisher beschriebenen Bechern mit mindestens einer Cellulosehydrat-Schicht und aufgetragenem Primermaterial bietet die vorliegende Erfindung auch Becher, umfassend einen Boden (1) und eine Seitenwand (2), wobei die Seitenwand (2) eine erste Schicht (5) und eine zweite Schicht (3) umfasst, wobei die erste Schicht (5) aus Naturkautschuk oder pflanzlichem Wachs besteht, und die zweite Schicht (3) einen Faser/ Zellstoff-Stärke Mix umfasst.

In einer Ausführungsform umfasst die erste Schicht (5) pflanzliches Wachs, umfassend Rapswachs und/ oder Sonnenblumenwachs und/ oder Sojawachs und/ oder Carnaubawachs, bevorzugt Carnaubawachs. In einigen Ausführungsformen besteht die erste Schicht (5) aus pflanzlichem Wachs, bevorzugt Carnaubawachs.

In einer Ausführungsform ist die zweite Schicht (3) zumindest teilweise aus Baobab-Pflanzenmaterial hergestellt. In bevorzugten Ausführungsformen umfasst die zweite Schicht Weizenstärke, Zellstoff und Magnesiumstearat. In bevorzugten Ausführungsformen umfasst die zweite Schicht 70-95% Stärke und 5-30% Zellstoff. In besonders bevorzugten Ausführungsformen umfasst die zweite Schicht 89% Stärke, bevorzugt Weizenstärke, 10% Zellstoff und 1% Magnesiumstearat, wobei optional 89% Stärke durch 84% Stärke, bevorzugt Weizenstärke, und 5% Weizenmehl ersetzt werden können.

In anderen Ausführungsformen besteht die zweite Schicht (3) aus Weizenstärke, Zellstoff und Magnesiumstearat und optional Weizenmehl.

Bei den Bechern dieser Alternative besteht der Boden (1) vorzugsweise aus dem gleichen Material wie die Seitenwand (2). In diesem Fall bestehen Boden und Seitenwand vorzugsweise aus einem Stück.

Die erste Schicht (5) ist dabei bevorzugt wieder die innere Schicht des Bechers ist und die zweite Schicht (3) die äußere Schicht des Bechers.

Die Becher der vorliegenden Erfindung sind recyclebar, kompostierbar und/oder vollständig biologisch abbaubar. In manchen Ausführungsformen sind die Becher innerhalb von 40 Tagen, bevorzugt innerhalb von 28 Tagen kompostierbar und/oder vollständig biologisch abbaubar. Außerdem können sie aufgrund ihres Stärkegehalts als Gartendünger verwendet werden.

### Herstellungsverfahren für Becher-Variante 1

Außerdem bietet die vorliegende Erfindung Verfahren zur Herstellung von Bechern mit mindestens einer Cellulosehydrat-Schicht und aufgetragenem Primermaterial.

Das in Anspruch 8 spezifizierte Verfahren umfasst die folgenden Schritte :
a. Bereitstellen eines zweiten Materials für eine zweite Schicht (3) der Seitenwand (2) des Bechers und des Bodens (1) des Bechers,
   i. wobei das zweite Material Cellulosehydrat, Papier, Pappe, Zellstoff, Faserstoff, Stärke oder eine Mischung davon umfasst,
b. Formen des zweiten Materials, um diesem die Form eines Bechers, umfassend Seitenwand und Boden, zu geben,
c. Beschichten des zweiten Materials mit einem rein pflanzlichen Primermaterial (4),
d. Bereitstellen eines ersten Materials für eine erste Schicht der Seitenwand (2) des Bechers und des Bodens (1) des Bechers,
   i. wobei das erste Material Cellulosehydrat ist,
e. Formen des ersten Materials, um diesem die Form eines Bechers, umfassend Seitenwand und Boden, zu geben,
f. Verbinden des ersten und des zweiten Materials, zumindest teilweise mittels des Primermaterials (4).

Bei allen Ausführungsformen des Verfahrens kann das Primermaterial (4) Gummi arabicum, und/oder Kartoffelstärke, Maisstärke oder Tapiokastärke; oder Stärke aus Maniok, Knollenbohne, Batate, Yamswurzel, Knollen-Platterbse, Arakacha, Knolligem Sauerklee, Knolliger Kapuzinerkresse, Ulluco, Ostindischer Pfeilwurz, Pfeilwurz, Achira, Taro, Tannia, Weißer Seerose, Gelber Teichrose oder Chayote umfassen. In bevorzugten Ausführungsformen umfasst das Primermaterial (4) Gummi arabicum und Stärke, vorzugsweise Kartoffelstärke oder Maisstärke. In besonders bevorzugten Ausführungsformen umfasst das Primermaterial zusätzlich Wasser.

Das zweite umfasst in manchen Ausführungsformen Baobab-Pflanzenmaterial. In besonders bevorzugten Ausführungsformen umfasst das zweite Material Baobab-Pflanzenmaterial und das Primermaterial Gummi arabicum und Stärke, wobei die Stärke vorzugsweise Kartoffelstärke oder Maisstärke ist In manchen Ausführungsformen umfasst das Verfahren außerdem das Stanzen eines Sichtfensters (6) in das zweite Material und/oder das Bedrucken des ersten Materials und/oder des zweiten Materials.

### Herstellungsverfahren für Becher-Variante 2

Des Weiteren stellt die Erfindung Verfahren für die Herstellung von Bechern bereit, die eine Alternative zu denen mit mindestens einer Cellulosehydrat-Schicht und aufgetragenem Primermaterial darstellen.

Das Verfahren der Erfindung ist Verfahren zur Herstellung eines Bechers, umfassend einen Boden (1) und eine Seitenwand (2) und einen Boden, wobei das Verfahren die folgenden Schritte umfasst:
a. Bereitstellen eines zweiten Materials für eine zweite Schicht (3) der Seitenwand (2) des Bechers und des Bodens (1) des Bechers,
   i. wobei das zweite Material eine Mischung aus Zellstoff, und/oder Faserstoff, und Stärke und zusätzlich Wasser umfasst,
b. Formen des zweiten Materials, um diesem die Form eines Bechers, umfassend Seitenwand und Boden, zu geben,
c. Aushärten des zweiten Materials,
d. Bereitstellen eines ersten Materials für eine erste Schicht der Seitenwand (2) des Bechers und des Bodens (1) des Bechers,
   i. wobei das erste Material Naturkautschuk oder pflanzliches Wachs umfasst, bevorzugt Carnaubawachs,
e. Beschichten der zweiten Schicht (3) der Seitenwand (2) des Bechers und des Bodens (1) des Bechers aus dem zweiten Material mit dem ersten Material und somit erzeugen der ersten Schicht (5) der Seitenwand (2) des Bechers und des Bodens (1) des Bechers.

Bei manchen Ausführungsformen ist das erste Material Naturkautschuk oder pflanzliches Wachs, umfassend Rapswachs und/ oder Sonnenblumenwachs und/ oder Sojawachs und/ oder Carnaubawachs, bevorzugt Carnaubawachs.

In bevorzugten Ausführungsformen umfasst das zweite Material zumindest teilweise Baobab-Pflanzenmaterial. In noch bevorzugteren Ausführungsformen umfasst das zweite Material Weizenstärke, Zellstoff und Magnesiumstearat. Zusätzlich kann das zweite Material Wasser umfassen. In einer noch bevorzugteren Ausführungsform umfasst das zweite Material 70-95% Stärke und 5-30% Zellstoff und zusätzlich Wasser. In der bevorzugtesten Ausführungsform umfasst das zweite Material 89% Stärke, bevorzugt Weizenstärke, 10% Zellstoff und 1% Magnesiumstearat und zusätzlich 70% Wasser (entspricht einer Gesamtmischung von 52,4% Stärke, 41,1% Wasser, 5,9% Zellstoff und 0,6% Magnesiumstearat) oder 84% Stärke, bevorzugt Weizenstärke, 10% Zellstoff, 5% Weizenmehl und 1% Magnesiumstearat und zusätzlich 70% Wasser (enstpricht einer Gesamtmischung von 49,5% Stärke, 41,1% Wasser, 5,9% Zellstoff, 2,9% Weizenmehl und 0,6% Magnesiumstearat).

In manchen Ausführungsformen umfasst das zweite Material zusätzlich Lebensmittelfarbe.

In manchen Ausführungsformen umfasst das Verfahren außerdem das Bedrucken des ersten Materials und/oder des zweiten Materials.

### Deckel für Becher, Schalen und Behälter

Außer Bechern, vorzugsweise Getränkebecher, stellt die vorliegende Erfindung auch Deckel für diese Becher, bereit. Ein Deckel der vorliegenden Erfindung besteht aus dem Material, das oben für die Seitenwand des Bechers beschrieben ist.

Die vorliegende Erfindung betrifft via Verfahrens-Anspruch 18 auch einen Kombination von Becher und Deckel, gebildet aus einem Becher der vorliegenden Erfindung und einem Deckel der vorliegenden Erfindung. Hierbei sind die Seitenwand des Bechers und der Deckel aus dem gleichen Material.

Schließlich bietet die Erfindung auch ein Verfahren zur Herstellung eines Deckels, wobei der Deckel nach dem gleichen Verfahren wie der Becher hergestellt wird.

### Vorteile der Erfindung

Die vorliegende Erfindung bietet Becher, die eine Schicht aus Cellulosehydrat, beschichtet mit einem Primermaterial, umfassen. Das Cellulosehydrat dient bei den Bechern der vorliegenden Erfindung als Barriere-Beschichtung (v.a. als Wasserbarriere). Diese Eigenschaft sowie die Stabilität der Becher werden durch das Primermaterial verstärkt. Die gleichen Funktionen erfüllen Cellulosehydrat und Primermaterial auch für die Deckel der vorliegenden Erfindung.

Durch die Verwendung von Cellulosehydrat und einem biologisch abbaubaren Primermaterial sind die Becher und Deckel der vorliegenden Erfindung funktionell und vielseitig einsetzbar, aber im Gegensatz zu herkömmlichen Einweg-Bechern vollständig biologisch abbaubar oder sogar kompostierbar. Zudem können die Becher der vorliegenden Erfindung teilweise oder vollständig transparent sein.

Die vorliegende Erfindung bietet zudem Becher, die eine Schicht aus Naturkautschuk oder pflanzlichem Wachs umfassen. Diese Schicht dient bei den Bechern der vorliegenden

Erfindung als Barriere-Beschichtung (v.a. als Wasserbarriere). Diese Eigenschaft sowie die Stabilität der Becher werden durch den Naturkautschuk bzw. das Wachs verstärkt. Die gleichen Funktionen erfüllen Naturkautschuk oder Wachs auch für die Deckel der vorliegenden Erfindung. Auch erhöht eine Schicht aus Naturkautschuk oder Wachs die Oberflächenstruktur des Bechers (der zweiten Schicht) und/ oder Deckels und die Becher und Deckel haften somit besser aneinander.

Durch die Verwendung von nicht-vulkanisiertem Naturkautschuk oder Wachs und einem Mix aus Cellulosehydrat, Pappe, Faser-/Zellstoff und/oder Stärke sind die Becher und Deckel der vorliegenden Erfindung funktionell und vielseitig einsetzbar, aber im Gegensatz zu herkömmlichen Einweg-Bechern vollständig biologisch abbaubar oder sogar kompostierbar. Enthalten die Becher pflanzliche Stärke, können sie sogar als Pflanzendünger verwendet werden oder als Fischfutter dienen, sollten sie einmal ins Meer gelangen.

Zudem können die Becher der vorliegenden Erfindung teilweise oder vollständig transparent sein oder mittels Lebensmittelfarbe gefärbt sein. Farbige Becher und/ oder Deckel können so zum Wiedererkennungswert bestimmter Firmen und/ oder Inhalte beitragen.

Wenn die zweite Schicht des Bechers und/oder Deckels Magnesiumstearat umfasst, hat dies den Vorteil, dass sich die gegossene zweite Schicht leichter aus einer Form lösen lässt. Daher ist eine zweite Schicht mit Magnesiumstearat besonders geeignet, wenn ein Pressverfahren oder Gussverfahren, etwa Spritzguss- oder Hotpressverfahren zum Einsatz kommen.

### Beschreibung der Zeichnungen

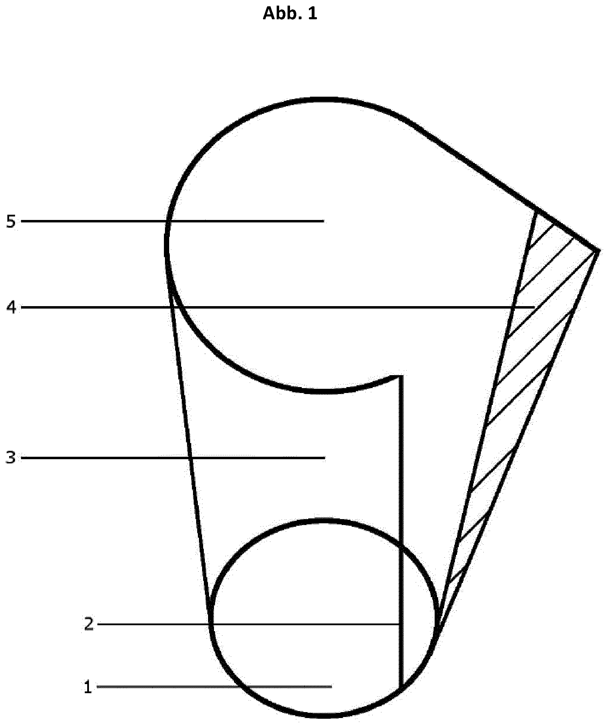

Abb. 1: Diese Abbildung zeigt einen Becher gemäß der vorliegenden Erfindung. Der Becher umfasst einen Boden (1) und eine Seitenwand (2). Zur Veranschaulichung der Schichten ist die Seitenwand (2) rechts geöffnet und in Schichten getrennt dargestellt. Die Seitenwand umfasst eine innere erste Schicht (5) aus Cellulosehydrat und eine äußere zweite Schicht (3) aus Papier, Pappe, Faser-/Zellstoff, Stärke oder Cellulosehydrat. Zwischen den Schichten ist ein Primermaterial (4, durch die Schraffur angedeutet) aufgetragen.

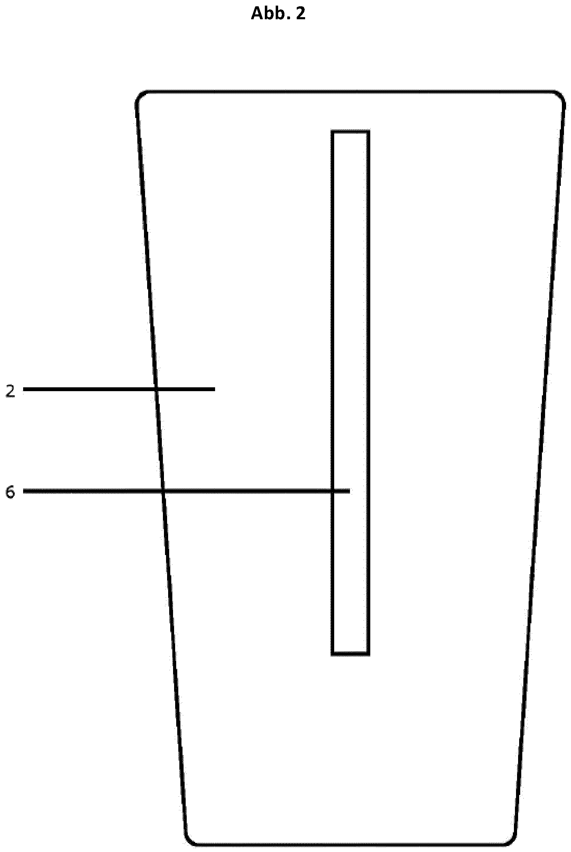

Abb. 2: Diese Abbildung zeigt einen Becher gemäß der vorliegenden Erfindung. Der Becher enthält ein Sichtfenster (6) in der Seitenwand (2).

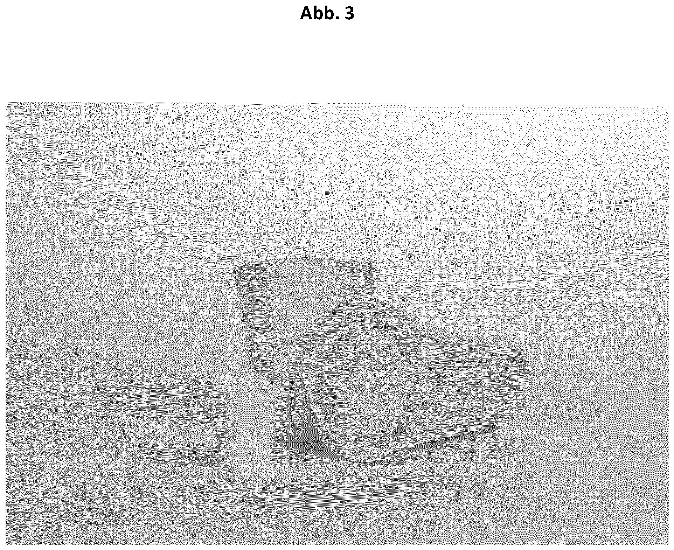

Abb. 3: Diese Abbildung zeigt Becher und Deckel (Variante 2) gemäß der vorliegenden Erfindung, wobei es sich um Getränkebecher mit entsprechendem Deckel der vorliegenden

Erfindung handelt. Die Abbildung zeigt Becher verschiedener Größen, sowohl mit wie auch ohne Deckel.

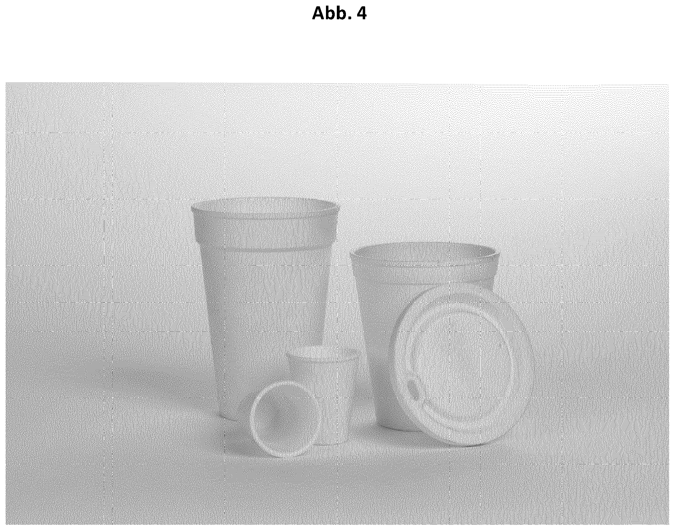

Abb. 4: Diese Abbildung zeigt Becher und Deckel (Variante 2) gemäß der vorliegenden Erfindung. Die Abbildung zeigt Becher verschiedener Größen, sowohl mit wie auch ohne Deckel.

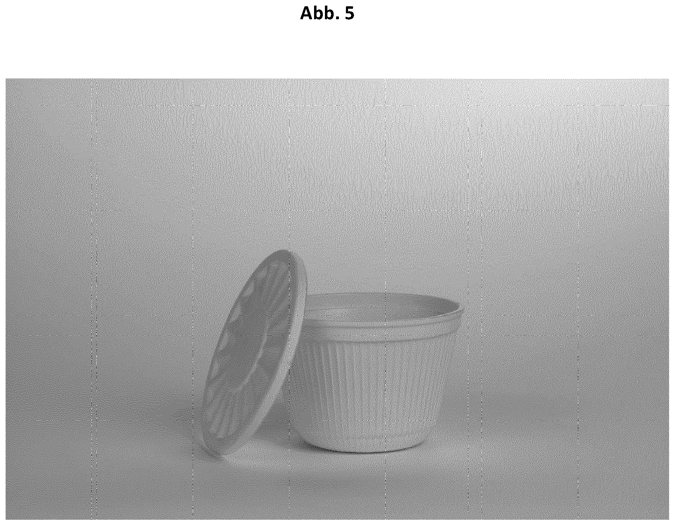

Abb. 5: Diese Abbildung zeigt einen Becher und Deckel (Variante 2) gemäß der vorliegenden Erfindung, wobei es sich um einen Behälter mit entsprechendem Deckel der vorliegenden Erfindung handelt, der zum Beispiel als Vorrats- oder Suppenbehälter Verwendung findet.

### Ausführliche Beschreibung

### Definitionen:

**Cellulosehydrat,** oft auch mit dem Handelsnamen Cellophan oder als Zellglas bezeichnet, ist ein synthetisches Material natürlichen Ursprungs, das aus Cellulose hergestellt wird. Durch Umsetzen der Cellulose mit Natronlauge (NaOH) und Schwefel-Kohlenstoff (CS₂) erhält man Cellulosexanthogenat. Die Lösung des Xanthogenats in Natronlauge ist honiggelb und zähflüssig (Viskose). Sie wird durch Schlitzdüsen in saure Fällbäder gepresst. Bei diesem Vorgang werden Schwefelkohlenstoff und Schwefelwasserstoff (H₂S) frei. Die entstehenden Cellulosehydrat-Folien werden durch Waschbäder geleitet und getrocknet.

Die Bezeichnung **"Primer"** oder **"Primermaterial"** bezeichnet einen Haftvermittler, der zwei nicht mischbare Materialien verbinden kann. Das Aufbringen von Primermaterial dient zum einen der Zusammenführung von zwei Materialien, zum anderen verleiht es einem damit beschichteten Material auch eine erhöhte Stabilität. Zum Beispiel kann ein Primermaterial als Klebstoff Pappe mit Cellulosehydrat verbinden und/oder die die Stabilität von Cellulosehydrat erhöhen. Bevorzugte Primer der vorliegenden Erfindung sind vegan, vollständig biologisch abbaubar, kompostierbar, säurefrei und/oder kristallklar. Ein besonders bevorzugter Primer der vorliegenden Erfindung erfüllt alle diese Eigenschaften. Vorzugsweise reagiert das Primermaterial auf Hitze. Geeignete Primer der vorliegenden Erfindung umfassen Pflanzenmaterial, vorzugsweise aus Pflanzen gewonnene Stärke. Ein bevorzugter Primer der vorliegenden Erfindung umfasst Gummi arabicum und Stärke. Zudem umfasst der Primer vorzugsweise einen flüssigen Bestandteil, etwa Wasser. Daher umfasst ein beispielhafter Primer der vorliegenden Erfindung Gummi arabicum, Stärke und Wasser. Die Stärke ist hierbei vorzugsweise Kartoffelstärke oder Maisstärke. Der Anteil von Gummi arabicum kann 1-50%, vorzugsweise 5-20%, noch bevorzugter 10%. Der Stärkeanteil kann 5-70%, vorzugsweise 15-50 %, noch bevorzugter 30% betragen betragen. Der Wasseranteil kann 10-90%, vorzugsweise 30-80%, noch bevorzugter 60% betragen. Ein besonders bevorzugter Primer der vorliegenden Erfindung enthält 10% Gummi arabicum, 30% Stärke (Kartoffelstärke oder Maisstärke) und 60% Wasser. Tabelle 1 zeigt die Zusammensetzung von beispielhaften Primermaterialien der vorliegenden Erfindung.

**Tabelle 1: Beispielhafte Zusammensetzungen des Primermaterials**

| Beispielhaftes Primermaterial | Gummi arabicum | Stärke (z.B. aus Kartoffel oder Mais) | Wasser |
|---|---|---|---|
| 1 | 5-20% | 15-50% | 30-80% |
| 2 | 10-15% | 20-40% | 45-70% |
| 3 | 5% | 15-50% | 45-80% |
| 4 | 10% | 15-50% | 40-75% |
| 5 | 5-20% | 50% | 30-45% |
| 6 | 5-20% | 30% | 50-65% |
| 7 | 5% | 50% | 45% |
| 8 | 10% | 50% | 40% |
| 9 | 5% | 30% | 65% |
| 10 | 10% | 30% | 60% |

**"Pflanzliche Stärke"** bezieht sich auf jegliche aus Pflanzenmaterial gewonnene Stärke. Die Stärke kann dabei etwa aus Wurzeln, Rüben, Knollen, Rhizomen, Sprossachsen, Blättern, Früchten oder Samen gewonnen werden. Beispiele für pflanzliche Stärke sind Weizenstärke, Kartoffelstärke, Maisstärke oder Tapiokastärke; Stärke aus Maniok *(Manihot esculenta),* Knollenbohne *(Pachyrhizus tuberosus),* Batate *(Ipomoea batatas),* Yamswurzel *(Dioscorea spec.),* Knollen-Platterbse *(Lathyrus tuberosus),* Arakacha *(Arracacia xanthorrhiza),* Knolligem Sauerklee *(Oxalis tuberosa),* Knolliger Kapuzinerkresse *(Tropaeolum tuberosum),* Ulluco *(Ullucus tuberosus),* Ostindischer Pfeilwurz *(Tacca leontopetaloides),* Pfeilwurz *(Maranta spec.),* Achira *(Canna indica),* Taro *(Colocasia esculenta),* Tannia *(Xanthosoma sagittifolium),* Weißer Seerose *(Nymphaea alba),* Gelber Teichrose *(Nuphar lutea)* oder

Chayote *(Sechium edule).* Wenn Stärke in der vorliegenden Erfindung nicht als Bestandteil eines Primers verwendet wird, so wird Weizenstärke, Krtoffelstärke und Maisstärke bevorzugt verwendet. Besonders bevorzugt wird die Verwendung von Weizenstärke.

**"Pappe"** und **"Papier"** beschreibt hier das gleiche chemische Material, wobei "Pappe" bei einem Quadratmetergewicht über 225 g/m² und "Papier" bei einem Quadratmetergewicht unter 225 g/m² verwendet wird.

**"Faserstoff"** bezeichnet aus Fasern gewonnenes Material, das für die Herstellung von Papier und Pappe verwendet wird. Faserstoffe bestehen zum einem Großteil aus Cellulose. Faserstoffe sind beispielsweise Zellstoff und Holzstoff.

**"Zellstoff"** bezeichnet die beim chemischen Aufschluss von Pflanzen, v.a. Holz, entstehende faserige Masse. Sie besteht zu einem Großteil aus Cellulose.

**"Holzstoff"** bezeichnet die bei mechanischem Aufschluss von Pflanzen, v.a. Holz, entstehende faserige Masse. Holzstoff enthält, anders als Zellstoff für höherwertige Papiere, große Anteile an Lignin.

**"Wachs"** bezeichnet jegliches in der Natur vorkommendes Wachs, wie etwa Carnaubawachs, Rapswachs, Sonnenblumenwachs oder Sojawachs. In der vorliegenden Erfindung bevorzugt ist Carnaubawachs.

**"Carnaubawachs"** wird aus dem Blatt der Carnaubapalme (*Copernicia prunifera*) gewonnen. In der vorliegenden Erfindung kommt Carnaubawachs bevorzugt in Pulverform zur Anwendung. Carnaubawachs stellt eine besonders bevorzugte Ausführungsform der Erfindung dar.

**"Sojawachs"** wird aus reifen Sojabohnen (*Glycine max*) gewonnen. In der vorliegenden Erfindung kommt Sojawachs bevorzugt in Flockenform zur Anwendung. Sojawachs stellt eine besonders bevorzugte Ausführungsform der Erfindung dar.

**"Rapswachs"** wird aus Rapsöl und dieses wiederum aus reifen Rapssamen gewonnen. Rapswachs stellt eine Ausführungform der Erfindung dar.

**"Sonnenblumenwachs"** wird aus Sonnenblumenöl und dieses wiederum aus Sonnenblumenkernen gewonnen. Sonnenblumenwachs stellt eine Ausführungsform der Erfindung dar.

**"Naturkautschuk"** ist ein gummiartiger Stoff, der im Milchsaft von Kautschukpflanzen (z.B. Kautschukbaum (*Hevea brasiliensis*) enthalten ist. Aus diesem als Latex bekannten Milchsaft wird kann Naturkautschuk isoliert werden. Gereinigter Naturkautschuk ist annähernd transparent, mit leichtem Gelbstich. Bei Temperaturen von 3°C oder niedriger wird der Kautschuk spröde. Bei Temperaturen von über 145°C fängt er an klebrig zu werden. Bei Temperaturen von über 170°C wird er flüssig.

**"Magnesiumstearat"** ist das Magnesiumsalz der Stearinsäure. Es wird aus Fetten und Ölen gewonnen. Oft wird Soja-, Raps- oder Maiskeimöl verwendet. Magnesiumstearat wird bevorzugt in einer Konzentration zwischen 0,25% und 5,0% verwendet.

**"Lebensmittelfarbe"** bezeichnet Farbstoffe, die in der Lebensmittelindustrie verwendet werden, insbesondere natürliche Farbstoffe, die aus Pflanzen oder Tieren gewonnen werden. Bevorzugt werden pflanzliche Farbstoffe, wie beispielsweise natürliche Extrakte und Konzentrate aus Pflanzen, Früchten oder Gemüse. Ein Beispiel für einen solchen Farbstoff ist Spirulina Blau (Phycocyanin). Es ist der einzige natürliche blaue Farbstoff für Lebensmittel und wird aus der Spirulina-Alge gewonnen (*Spirulina platensis*)*.* Weitere Beispiele sind Carotinoide, Beerenfarbstoffe (Anthocyane), Beten-Farbstoffe (Betanin) und Farbstoffe von Gewürzen wie Paprika, Safran und Gelbwurzel (Curcumin) oder auch Extrakte aus Pflanzen oder Früchten wie Rote Beete, Spinat- oder Holundersaft.

**"Kompostierbar"** bezeichnet die Eigenschaft eines Materials, nach 6 Monaten unter definierten aeroben Bedingungen zu 90% abgebaut zu werden. Die Kompostierbarkeit eines Materials kann nach DIN EN 13432, Version 2000-12, bestimmt werden.

**"Biologisch abbaubar"** bezeichnet die Charakteristik eines Prozesses, einen organischer Stoff biologisch, das heißt durch Lebewesen oder ihre Enzyme, vollständig abzubauen. Dabei findet der Abbau des Stoffes unter aeroben Bedingungen in höchstens 10 Jahren, bevorzugt in 5 Jahren, noch bevorzugter in 1 Jahr statt.

**"Recyclebar"** heißt, dass das Material nach seiner Verwendung (etwa als Becher) durch einen Aufarbeitungsprozess (Recycling) als Material zur Herstellung eines neuen, nicht zur Verbrennung gedachten Produkts verwendet werden kann. Dies steht im Gegensatz zu Materialien, die nach ihrer Verwendung entweder durch Verbrennung verwertet oder dauerhaft deponiert werden müssen. Recyclebare Materialien sind etwa Papier, Pappe und Cellulosehydrat. Nicht recyclebar ist beispielsweise mit Wachs beschichtetes Papier.

### Ausführungsformen der Erfindung

### Becher

Ein Becher der vorliegenden Erfindung umfasst einen Boden und eine Seitenwand. In besonders bevorzugten Ausführungsformen ist der Becher biologisch abbaubar und/oder sogar kompostierbar. In manchen Ausführungsformen ist der Becher teilweise oder vollständig transparent oder mit Lebensmittelfarbe gefärbt.

### Becher-Variante 1

### a) Boden

Der Boden des Bechers ist wasserundurchlässig. Vorzugsweise ist er recyclebar, biologisch abbaubar und/oder kompostierbar.

In bevorzugten Ausführungsformen umfasst der Boden des Bechers mindestens eine erste Schicht aus Cellulosehydrat. In noch bevorzugteren Ausführungsformen ist die erste Schicht aus Cellulosehydrat mit einem Primermaterial beschichtet. Außerdem kann der Boden des Bechers eine zweite Schicht umfassen. In diesem Fall besteht die innerste Schicht des Bechers vorzugsweise aus Cellulosehydrat. Die zweite Schicht kann Cellulosehydrat, Papier, Pappe, Zellstoff, Faserstoff, Stärke oder eine Mischung umfassen oder daraus bestehen. In einer Ausführungsform umfasst der Boden Magnesiumstearat. Magnesiumstearat wirkt als Gleitmittel und bewirkt, dass sich das gegossene Objekt (hier die zweite Schicht des Bodens) leichter aus der Form lösen lässt. Dies ist für Gießverfahren günstig, insbesondere für das Spritzguss- und das Hotpressverfahren. Die zweite Schicht enthält vorzugsweise 1-20%, noch bevorzugter 2-10% und am bevorzugtesten 3-8% Magnesiumstearat. Eine beispielhafte geeignete zweite Schicht des Bodens umfasst 8% Faserstoff, 86,5% Kartoffelstärke, 5% Magnesiumstearat und 0,5% Konservierungsstoffe.

In besonders bevorzugten Ausführungsformen ist die zweite Schicht des Bodens zumindest teilweise aus Baobab-Pflanzenmaterial hergestellt.

In Ausführungsformen mit mehreren Schichten verbindet das Primermaterial die erste Schicht und die zweite Schicht.

Beispielhafte Böden der Becher der vorliegenden Erfindung bestehen aus einer ersten Cellulosehydrat-Schicht, die mit einem Primermaterial beschichtet ist; aus einer ersten Cellulosehydrat-Schicht, die mit einem Primermaterial beschichtet ist, und einer zweiten Cellulosehydrat-Schicht; aus einer ersten Cellulosehydrat-Schicht, die mit einem Primermaterial beschichtet ist, und einer zweiten Schicht aus Pappe oder Papier; aus einer ersten Cellulosehydrat-Schicht, die mit einem Primermaterial beschichtet ist; und einer zweiten Schicht aus Zellstoff und Stärke; oder aus einer ersten Cellulosehydrat-Schicht, die mit einem Primermaterial beschichtet ist, und einer zweiten Schicht aus Faserstoff. In besonders bevorzugten Ausführungsformen besteht der Boden des Bechers aus dem gleichen Material wie die Seitenwand des Bechers.

In manchen Ausführungsformen wird der Boden separat von der Seitenwand des Bechers hergestellt und anschließend mit ihr verbunden. In anderen Ausführungsformen werden Boden und Seitenwand, oder eine oder mehrere Schicht des Bodens und der Seitenwand, an einem Stück hergestellt. Dies ist beispielsweise der Fall, wenn zumindest eine Schicht von Boden und Seitenwand durch ein Pressverfahren oder Gussverfahren (z.B. Hotpressverfahren oder Spritzgussverfahren) hergestellt werden.

In manchen Ausführungsformen ist der Boden des Bechers transparent. Dies ist beispielsweise der Fall, wenn er nur aus einer oder mehreren Schichten Cellulosehydrat besteht.

### b) Seitenwand

Die Seitenwand des Bechers ist wasserundurchlässig. Sie ist biologisch abbaubar und/oder sogar kompostierbar.

Die Seitenwand des Bechers umfasst eine erste Schicht, die aus Cellulosehydrat besteht und mit einem Primermaterial beschichtet ist. Die erste Schicht kann eine Dicke zwischen 0,01 mm und 10 mm, zwischen 0,02 mm und 7 mm oder zwischen 0,05 mm und 5 mm haben. Für Becher mit einer zweiten Schicht aus Cellulosehydrat beträgt die Dicke der ersten Schicht vorzugsweise zwischen 0,5 mm und 1,5 mm, noch bevorzugter zwischen 0,8 mm und 1,2 mm. Beispielhafte Dicken der ersten Schicht sind hier 1 mm und 1,2 mm. Für Becher mit einer zweiten Schicht, die Papier, Pappe, Zellstoff, Faserstoff, Stärke oder eine Mischung umfasst, beträgt die Dicke der zweiten Schicht vorzugsweise 0,01 mm bis 0,5 mm, noch bevorzugter zwischen 0,02 mm und 0,1 mm. Eine beispielhafte Dicke der ersten Schicht ist hier 0,023 mm.

Die innerste Schicht des Bechers besteht aus Cellulosehydrat (d.h., die erste Schicht ist vorzugsweise die innere Schicht, die zweite Schicht ist vorzugsweise die äußere Schicht). Die zweite Schicht kann Cellulosehydrat, Papier, Pappe, Zellstoff, Faserstoff, Stärke oder eine Mischung umfassen oder daraus bestehen. In manchen Ausführungsformen besteht die zweite Schicht aus Pappe oder Papier. Dabei kann die Grammatur 100-350 g/m², bevorzugt 170-350 g/m², noch bevorzugter 150 g/m² betragen. Bevorzugt weist die Pappe oder das Papier eine hohe Steifigkeit und eine gute Nassleimung auf. Letzteres verringert die innere Oberflächenspannung und somit die Kapillarität und erhöht durch Versiegelung der Faser-zu-Faser-Bindungsstellen die Reißfestigkeit des Papiers/der Pappe deutlich. Ebenfalls weist das Papier/die Pappe bevorzugt gute Dehnungseigenschaften auf.

In anderen Ausführungsformen besteht die zweite Schicht aus 1-50% (bevorzugt 5-20%, noch bevorzugter 8%) Zellstoff, 50-97% (bevorzugter 70-95%, noch bevorzugter 91,5%) Stärke und 0-1% (bevorzugter 0,5%) Konservierungsstoffen. Das Verhältnis von Fasern (Zellstoff) zu Stärke beträgt bevorzugt zwischen 1:20 und 2:3.

In einer anderen Ausführungsform umfasst die zweite Schicht Magnesiumstearat. Magnesiumstearat wirkt als Gleitmittel und bewirkt, dass sich das gegossene Objekt (hier die zweite Schicht) leichter aus der Form lösen lässt. Dies ist für Gießverfahren günstig, insbesondere für das Spritzguss- und das Hotpressverfahren. Die zweite Schicht enthält vorzugsweise 1-20%, noch bevorzugter 2-10% und am bevorzugtesten 3-8% Magnesiumstearat. Eine beispielhafte geeignete zweite Schicht umfasst 8% Faserstoff, 86,5% Kartoffelstärke, 5% Magnesiumstearat und 0,5% Konservierungsstoffe.

In besonders bevorzugten Ausführungsformen ist die zweite Schicht zumindest teilweise aus Baobab-Pflanzenmaterial hergestellt. Die zweite Schicht hat vorzugsweise eine Dicke zwischen 0,1 mm und 5 mm, bevorzugter zwischen 0,15 mm und 2 mm, noch bevorzugter zwischen 0,2 mm und 1 mm. Beispielhafte Dicken der zweiten Schicht sind 0,2 mm und 0,35 mm.

Erfindungsgemäss verbindet das Primermaterial die erste Schicht und die angrenzende zweite Schicht.

Beispielhafte Seitenwände der Becher der vorliegenden Erfindung bestehen aus einer ersten Cellulosehydrat-Schicht, die mit einem Primermaterial beschichtet ist und einer zweiten Cellulosehydrat-Schicht; aus einer ersten Cellulosehydrat-Schicht, die mit einem Primermaterial beschichtet ist, und einer zweiten Schicht aus Pappe oder Papier; aus einer ersten Cellulosehydrat-Schicht, die mit einem Primermaterial beschichtet ist; und einer zweiten Schicht aus Zellstoff und Stärke; oder aus einer ersten Cellulosehydrat-Schicht, die mit einem Primermaterial beschichtet ist, und einer zweiten Schicht aus Faserstoff. In besonders bevorzugten Ausführungsformen besteht die Seitenwand des Bechers aus dem gleichen Material wie der Boden des Bechers.

In manchen Ausführungsformen wird die Seitenwand separat vom Boden des Bechers hergestellt und anschließend mit ihm verbunden. In anderen Ausführungsformen werden Boden und Seitenwand, oder eine oder mehrere Schicht des Bodens und der Seitenwand, an einem Stück hergestellt. Dies ist beispielsweise der Fall, wenn zumindest eine Schicht von Boden und Seitenwand durch ein Pressverfahren oder Gussverfahren (z.B. Hotpressverfahren oder Spritzgussverfahren) hergestellt werden.

In manchen Ausführungsformen umfasst die Seitenwand des Bechers ein oder mehrere Sichtfenster. Diese können z.B. dadurch hergestellt werden, dass ein Fenster in eine zweite nicht-transparente Schicht, etwa Pappe, geschnitten wird, sodass der Becher an der Position des Fensters nur aus der ersten Schicht aus Cellulosehydrat besteht. In anderen Ausführungsformen ist die Seitenwand des Bechers vollständig transparent. Dies ist beispielsweise der Fall, wenn sie nur aus einer oder mehreren Schichten Cellulosehydrat besteht.

### Eigenschaften der Becher

Die vorliegende Erfindung bietet Becher, die eine Schicht aus Cellulosehydrat, beschichtet mit einem Primermaterial, umfassen. Das Cellulosehydrat dient bei den Bechern der vorliegenden Erfindung als Barriere-Beschichtung (v.a. als Wasserbarriere). Diese Eigenschaft sowie die Stabilität der Becher werden durch das Primermaterial verstärkt. Durch die Verwendung von Cellulosehydrat und einem biologisch abbaubaren Primermaterial sind die Becher der vorliegenden Erfindung funktionell und vielseitig einsetzbar, aber im Gegensatz zu herkömmlichen Einweg-Bechern vollständig biologisch abbaubar oder sogar kompostierbar. Zudem können die Becher der vorliegenden Erfindung teilweise oder vollständig transparent sein.

In manchen Ausführungsformen umfassen die Becher der vorliegenden Erfindung zusätzlich eine Isolierschicht zur Wärmespeicherung. In einer Ausführungsform handelt es sich dabei um eine gewellte Papp-Schicht, die außen um den Becher gewickelt ist. In einer bevorzugten Ausführungsform ist die gewellte Papp-Schicht aus recycelten Materialien gefertigt.

In einigen Ausführungsformen kann zusätzlich im Laufe des Verfahrens die obere Becher-Kante eingerollt werden, um eine Lockenlippe zu formen.

Ein Becher der vorliegenden Erfindung weist einen Cellulosehydrat-Anteil zwischen 0,1% und nahezu 100% (gesamter Becher aus Cellulosehydrat, mit Ausnahme des Primers) auf. In bevorzugten Ausführungsformen beträgt der Cellulosehydrat-Anteil 1% bis 10%. In einer besonders bevorzugten Ausführungsform der Erfindung besteht der Becher zu 94,9% aus Pappe/Papier, zu5% aus Cellulosehydrat und zu 0,1% aus Primermaterial. Beispielhafte Zusammensetzungen des Bechers sind in Tabelle 2 gezeigt.

**Tabelle 2: Beispielhafte Zusammensetzungen der Becher**

| Beispiel-Becher | Cellulosehydrat | Primer | Anderes Material |
|---|---|---|---|
| 1 | 95%-99,9% | 0,1%-5% | - |
| 2 | 98%-99,9% | 0,1%-2% | - |
| 3 | 2%-10% | 0,1%-5% | 85%-97,9% Papier |
| 4 | 2%-10% | 0,1%-5% | 85%-97,9% Pappe |
| 5 | 2%-10% | 0,1%-5% | 85%-97,9% Zellstoff |
| 6 | 2%-10% | 0,1%-5% | 85%-97,9% Faserstoff |
| 7 | 2%-10% | 0,1%-5% | 5-20% Zellstoff 65%-92,9% Stärke |
| 8 | 2%-10% | 0,1%-5% | 5-20% Zellstoff |
| | | | 65%-92,8% Stärke |
| | | | 0,1%-0,5% |
| | | | Konservierungsstoffe |
| 9 | 5% | 0,1%-5% | 90%-94,9% Papier |
| 10 | 5% | 0,1%-5% | 90%-94,9% Pappe |
| 11 | 5% | 0,1%-5% | 90%-94,9% Zellstoff |
| 12 | 5% | 0,1%-5% | 90%-94,9% Faserstoff |
| 13 | 5% | 0,1%-5% | 5-20% Zellstoff 7 0% - 89,9% Stärke |
| 14 | 5% | 0,1%-5% | 5-20% Zellstoff |
| | | | 70%-89,8% Stärke |
| | | | 0,1%-0,5% |
| | | | Konservierungsstoffe |
| 15 | 5% | 0,1% | 94,5% Papier |
| 16 | 10% | 0,1% | 89,5% Papier |

Bevorzugte Volumina der Becher der Erfindung reichen von 25-2500 ml. Ein beispielhafter Becher gemäß der vorliegenden Erfindung weist ein Volumen von 300ml auf, bei 11 cm Höhe und 11 g Gewicht.

### Becher-Variante 2

Als Alternative zu den bisher beschriebenen Bechern mit mindestens einer Schicht aus Cellulosehydrat und aufgetragener Primer-Beschichtung stellt die vorliegende Erfindung auch Becher mit einer ersten Schicht aus Naturkautschuk oder pflanzlichem Wachs bereit. Die Wasserundurchlässigkeit und die Stabilität, die bei den obigen Bechern durch Cellulosehydrat und Primer-Beschichtung erreicht wird, wird hier durch den Naturkautschuk bzw. das pflanzliche Wachs erzielt.

Alle obigen Angaben über Form, Eigenschaften und Herstellungsverfahren der Becher (insbesondere des Bodens und der zweiten Schicht der Seitenwand, oder auch das Beimischen von Magnesiumstearat) können auf diese Becher mit den alternativen ersten Schichten übertragen werden. Der wesentliche

Unterschied besteht darin, dass statt der ersten Cellulosehydrat-Schicht und der Primer-Beschichtung das Auftragen der alternativen ersten Schicht aus Naturkautschuk oder pflanzlichem Wachs auf die zweite Schicht der Seitenwand erfolgt. Das Auftragen der ersten Schicht aus Naturkautschuk oder pflanzlichem Wachs erfolgt vorzugsweise durch Sprühdüsen, ähnlich dem Auftragen des oben beschriebenen Primermaterials. Vor allem bei Carnauba-Wachs ist das Auftragen der ersten Schicht bei einer höheren Temperatur (z.B. 70-120 °C) günstig. Die Herstellung von Bechern mit den alternativen ersten Schichten ist unten aufgeführt, sowie exemplarisch in den Beispielen 9 und 10 und 14-16 dargestellt.

### Eigenschaften der Becher-Variante 2

Beispielhafte Zusammensetzungen der Becher ohne erste Schicht aus Cellulosehydrat und Primer sind in Tabelle 3 gezeigt.

**Tabelle 3: Beispielhafte Zusammensetzungen der Becher mit alternativer erster Schicht wobei die Beispiele 1-4 sowie 16-19 nicht erfindungsgemäss sind.**

| Beispiel-Becher | Material der ersten Schicht | Material der zweiten Schicht |
|---|---|---|
| 1 | Naturkautschuk | Papier |
| 2 | Naturkautschuk | Pappe |
| 3 | Naturkautschuk | Zellstoff |
| 4 | Naturkautschuk | Faserstoff |
| 5 | Naturkautschuk | 5%-35% Zellstoff 65%-95% Stärke |
| 6 | Naturkautschuk | 3%-25% Zellstoff 74,5-95% Stärke |
| | | 0,1%-0,5% Konservierungsstoffe |
| 7 | Naturkautschuk | 5-30% Zellstoff, 70-95% Stärke |
| 8 | Naturkautschuk | 89% Stärke, 10% Zellstoff, |
| | | 1% Magnesiumstearat |
| 9 | Naturkautschuk | 89% Weizenstärke, 10% Zellstoff, |
| | | 1% Magnesiumstearat |
| 10 | Naturkautschuk | 89% Maisstärke, 10% Zellstoff, |
| | | 1% Magnesiumstearat |
| 11 | Naturkautschuk | 84% Stärke, 10% Zellstoff, 5% Weizenmehl |
| | | 1% Magnesiumstearat |
| 12 | Naturkautschuk | 84% Weizenstärke, 10% Zellstoff, 5% Weizenmehl |
| | | 1% Magnesiumstearat |
| 13 | Naturkautschuk | 87,5% Stärke, 12% Zellstoff, 0,5% Magnesi umstearat |
| 14 | Naturkautschuk | 87,5% Weizenstärke, 12% Zellstoff, 0,5% Magnesi umstearat |
| 15 | Naturkautschuk | 87,5% Maisstärke, 12% Zellstoff, 0,5% Magnesi umstearat |
| 16 | Carnauba- Wachs | Papier |
| 17 | Carnauba- Wachs | Pappe |
| 18 | Carnauba- Wachs | Zellstoff |
| 19 | Carnauba- Wachs | Faserstoff |
| 20 | Carnauba- Wachs | 5-35% Zellstoff 65%-95% Stärke |
| 21 | Carnauba- Wachs | 3%-35% Zellstoff 74,5-95% Stärke |
| | | 0,1%-0,5% Konservierungsstoffe |
| 22 | Carnaubawachs, Sojawachs, Rapswachs oder Sonnenblumenwachs | 5-30% Zellstoff, 70-95% Stärke |
| 23 | Carnaubawachs, Sojawachs, Rapswachs oder Sonnenblumenwachs | 89% Stärke, 10% Zellstoff, |
| | | 1% Magnesiumstearat |
| 24 | Carnaubawachs, Sojawachs, Rapswachs oder Sonnenblumenwachs | 89% Weizenstärke, 10% Zellstoff, |
| | | 1% Magnesiumstearat |
| 25 | Carnaubawachs, Sojawachs, Rapswachs oder Sonnenblumenwachs | 89% Maisstärke, 10% Zellstoff, 1% Magnesiumstearat |
| 26 | Carnaubawachs, Sojawachs, Rapswachs oder Sonnenblumenwachs | 84% Stärke, 10% Zellstoff, 5% Weizenmehl |
| | | 1% Magnesiumstearat |
| 27 | Carnaubawachs, Sojawachs, Rapswachs oder Sonnenblumenwachs | 84% Weizenstärke, 10% Zellstoff, 5% Weizenmehl |
| | | 1% Magnesiumstearat |
| 28 | Carnaubawachs, Sojawachs, Rapswachs oder Sonnenblumenwachs | 87,5% Stärke, 12% Zellstoff, 0,5% Magnesi ustearat |
| 29 | Carnaubawachs, Sojawachs, Rapswachs oder Sonnenblumenwachs | 87,5% Weizenstärke, 12% Zellstoff, 0,5% Magnesi ustearat |
| 30 | Carnaubawachs, Sojawachs, Rapswachs oder Sonnenblumenwachs | 87,5% Maisstärke, 12% Zellstoff, 0,5% Magnesi ustearat |

Besonders bevorzugt sind die Beispiel-Becher, die Naturkautschuk und 89% Stärke, bevorzugt Weizenstärke, 10% Zellstoff und 1% Magnesiumstearat umfassen.

Besonders bevorzugt sind die Beispiel-Becher, die Naturkautschuk und 89% Stärke, bevorzugt Maisstärke, 10% Zellstoff und 1% Magnesiumstearat umfassen.

Besonders bevorzugt sind die Beispiel-Becher, die Naturkautschuk und 85% Stärke, bevorzugt Weizenstärke, 10% Zellstoff, 5% Weizenmehl und 1% Magnesiumstearat umfassen.

Besonders bevorzugt sind die Beispiel-Becher, die Carnauba-, Soja-, Raps- oder Sonnenblumenwachs, bevorzugt Carnaubawachs, und 89% Stärke, bevorzugt Weizenstärke, 10% Zellstoff und 1% Magnesiumstearat umfassen.

Besonders bevorzugt sind die Beispiel-Becher, die Carnauba-, Soja-, Raps- oder Sonnenblumenwachs, bevorzugt Carnaubawachs, und 89% Stärke, bevorzugt Maisstärke, 10% Zellstoff und 1% Magnesiumstearat umfassen.

Besonders bevorzugt sind die Beispiel-Becher, die Carnauba-, Soja-, Raps- oder Sonnenblumenwachs, bevorzugt Carnaubawachs, und 85% Stärke, bevorzugt Weizenstärke, 10% Zellstoff, 5% Weizenmehl und 1% Magnesiumstearat umfassen.

### Verwendung der Becher

Becher der vorliegenden Erfindung sind für eine Vielzahl von Verwendungszwecken geeignet. Sie eignen sich für eine Vielzahl von Getränken, wie z.B. Heißgetränke, Tee, Kaffee, Kaltgetränke, wie Saft, Saftschorlen, Limonaden, Wasser etc. oder alkoholische Getränke, wie z.B. Bier, Wein, Cocktails etc. Daneben könne die Becher auch für andere Inhalte verwendet werden, bevorzugt als Behälter für Speisen oder Nahrungsmittel, z.B. Popcorn, Eis oder Obst, als Transportbehälter für "To-Go"-Gerichte, Suppen, Nudeln, Reis. Ebenfalls können die Becher als Pflanztöpfe verwendet werden. Genauso können die Becher als Verpackungsmaterial, z.B. in Form einer Verpackungsschachtel verwendet werden. Die Becher können auch als Papiereimer oder sonstige Abfallbehältnisse Verwendung finden. Ebenfalls können die Becher als Vorrats- oder Ablagebehälter verwendet werden.

### Herstellungsverfahren

Die vorliegende Erfindung bietet auch Verfahren zur Herstellung von Bechern gemäß der vorliegenden Erfindung.

### Verfahren zur Herstellung eines Bechers der Variante 1

Das Verfahren der Erfindung zur Herstellung von Bechern besteht aus folgenden Schritten:
a. Bereitstellen eines zweiten Materials für eine zweite Schicht der Seitenwand des Bechers und des Bodens des Bechers,
   i. wobei das zweite Material Cellulosehydrat, Papier, Pappe, Zellstoff, Faserstoff, Stärke oder eine Mischung davon umfasst,
b. Formen des zweiten Materials, um diesem die Form eines Bechers, umfassend Seitenwand und Boden, zu geben,
c. Beschichten des zweiten Materials mit einem rein pflanzlichen Primermaterial,
d. Bereitstellen eines ersten Materials für eine erste Schicht der Seitenwand des Bechers und des Bodens des Bechers,
   i. wobei das erste Material Cellulosehydrat ist,
e. Formen des ersten Materials, um diesem die Form eines Bechers, umfassend Seitenwand und Boden, zu geben,
f. Verbinden des ersten und des zweiten Materials, zumindest teilweise mittels des Primermaterials.

### Schritt a

In diesem Schritt wird das Material für eine zweite Schicht der Seitenwand bereitgestellt. Dies erfolgt bevorzugt durch Bereitstellen einer viskosen Masse. Das zweite Material Folie hat dabei eine Zusammensetzung und Eigenschaften, die oben für das Material der zweiten Schicht der Seitenwand des Bechers beschrieben sind. Eine beispielhafte Zusammensetzung ist eine Masse aus 1-50% (bevorzugt 5-20%, noch bevorzugter 8%) Zellstoff, 50-97% (bevorzugter 70-95%, noch bevorzugter 91,5%) Stärke und 0-1% (bevorzugter 0,5%) Konservierungsstoffen. Als Stärke wird bevorzugt Kartoffelstärke oder Maisstärke verwendet. Die Masse kann zudem Wasser umfassen.

### Schritt b

In diesem Schritt wird das Material für die zweite Schicht zu einer Seitenwand und einem Boden geformt. In bevorzugten Ausführungsformen sind Seitenwand und Boden aus einem Stück.

In manchen Ausführungsformen geschieht das Formen durch Einbringen einer Masse in eine Pressform. Dabei kann die Pressform auf 100-300 °C, bevorzugter auf 200 °C erhitzt sein. Sie kann zudem einen Druck von 1000-10.000 N/cm², bevorzugter 2000-5000 N/cm², noch bevorzugter 2500-4000 N/cm² ausüben. Das Pressen kann für 5-250 s, bevorzugter 10-100 s, bevorzugter 30 s geschehen.

In manchen Ausführungsformen geschieht das Formen durch Einspritzen einer Masse in eine Spritzgussform. Die Spritzgussform kann hierbei auf 100-300 °C, bevorzugter auf 200 °C erhitzt sein.

Beispielhafte Verfahren für das Formen der zweiten Schicht zu Seitenwand und Becher sind das Hotpressverfahren und das Spritzgussverfahren. Es kann auch jedes andere Gussverfahren zum Einsatz kommen, bei dem die Gussform beheizt wird und Wasser entweichen kann.

### Schritt c

In diesem Schritt wird die zu becherförmige zweite Schicht aus Schritt b mit einem Primermaterial beschichtet. Geeignete Primermaterialien sind oben beschrieben. Die Beschichtung erfolgt in bevorzugten Ausführungsformen durch Besprühen der zweiten Schicht mit dem Primermaterial. Die kann zum Beispiel durch Schlitzdüsen-Beschichtung erfolgen. In anderen Ausführungsformen erfolgte die Beschichtung durch Bestreichen oder Benetzen der zweiten Schicht mit dem Primermaterial.

### Schritt d

In diesem Schritt wird Cellulosehydrat für die erste Schicht der Seitenwand bereitgestellt. Dies erfolgt bevorzugt durch Bereitstellen einer Rolle von Cellulosehydrat-Folie. Die Cellulosehydrat-Folie hat dabei die Eigenschaften, die oben für die erste Schicht der Seitenwand des Bechers beschrieben sind.

### Schritt e

In diesem Schritt wird das Material für die erste Schicht zu einer Seitenwand und einem Boden geformt. In bevorzugten Ausführungsformen sind Seitenwand und Boden aus einem Stück.

In manchen Ausführungsformen geschieht das Formen durch Einbringen des ersten Materials in eine Pressform. Dabei kann die Pressform auf 80-300 °C, bevorzugter auf 100 °C erhitzt sein. Sie kann zudem einen Druck von 1000-10.000 N/cm², bevorzugter 1500-5000 N/cm², noch bevorzugter 2000-3000 N/cm² ausüben. Das Pressen kann für 1-60 s, bevorzugter 2-20 s, bevorzugter 5 s geschehen.

### Schritt f

In diesem Schritt werden das becherförmige, mit einem Primermaterial beschichtete zweite Material aus Schritt c und das erste Material aus Schritt e verbunden. Dies erfolgt zumindest teilweise durch das auf die zweite Schicht aufgetragene Primermaterial. Für die Verbindung der Materialien wird bevorzugt das erste Material in das zweite Material gelegt. In manchen Ausführungsformen werden die zweite Schicht und die erste Schicht außer durch die Klebe-Kraft des Primermaterials auch durch Anwendung von Hitze und/oder Druck verbunden. Dies kann etwa mit einer Pressmaschine durchgeführt werden. Bei der Verbindung der beiden Schichten kann eine Temperatur von 80-200 °C, bevorzugt 90-150 °C, bevorzugter 100 °C verwendet werden. Der Druck bei der Verbindung der Schichten kann 1000-10.000 N/cm², 2000-5000 N/cm², bevorzugter 3000-4000 N/cm² betragen. Das Pressen kann für 1-60 s, bevorzugter 5-30 s, bevorzugter 15 s geschehen. Durch Druck und Hitze passt sich die Form des ersten Materials der Form des zweiten Materials an.

In manchen dieser drei Ausführungsformen wird in der zweiten Schicht der Seitenwand des Bechers ein Sichtfenster angebracht. Dies kann dann sinnvoll sein, wenn die zweite Schicht des Bechers nicht-transparent ist (z.B. aus Pappe). Das Sichtfenster kann durch Stanzen in der zweiten Schicht angebracht werden. Das Anbringen des Sichtfensters kann vor oder nach dem Auftragen des Primermaterials stattfinden. Zum Anbringen des Sichtfensters können alle dem Fachmann bekannten geeigneten Schneide-Stanzverfahren verwendet werden. Dabei kann etwa eine Stanz-Maschine von Hangzhou Colon Machinery Co., Ltd., Modell CL-DC850 zum Einsatz kommen.

### Verfahren zur Herstellung eines Bechers der Variante 2

In dieser Variante besteht das Verfahren der Erfindung zur Herstellung von alternativen Bechern (Variante 2) aus folgenden Schritten:
a. Bereitstellen eines zweiten Materials für eine zweite Schicht der Seitenwand des Bechers und des Bodens des Bechers,
   i. wobei das zweite Material eine Mischung gemäss Anspruch 10 umfasst,
b. Formen des zweiten Materials, um diesem die Form eines Bechers, umfassend Seitenwand und Boden, zu geben,
c. Aushärten des zweiten Materials,
d. Bereitstellen eines ersten Materials für eine erste Schicht der Seitenwand des Bechers und des Bodens des Bechers,
   ii. wobei das erste Material Naturkautschuk oder pflanzliches Wachs ist, bevorzugt Carnaubawachs,
e. Beschichten des zweiten Materials mit dem ersten Material.

### Schritt a

In diesem Schritt wird das Material für eine zweite Schicht der Seitenwand bereitgestellt. Dies erfolgt bevorzugt durch Bereitstellen einer viskosen Masse. Das zweite Material hat dabei eine Zusammensetzung und Eigenschaften, die oben für das Material der zweiten Schicht der Seitenwand des Bechers beschrieben sind. Eine beispielhafte Zusammensetzung ist eine Masse aus 1-50% (bevorzugt 5-20%, noch bevorzugter 8%) Zellstoff, 50-97% (bevorzugter 70-95%, noch bevorzugter 91,5%) Stärke und 1% Magnesiumstearat. Als Stärke wird bevorzugt Weizenstärke verwendet. Die Masse kann zusätzlich Wasser umfassen.

### Schritt b

In diesem Schritt wird das Material für die zweite Schicht zu einer Seitenwand und einem Boden geformt. Seitenwand und Boden sind dabei bevorzugt aus einem Stück.

In manchen Ausführungsformen geschieht das Formen durch Einbringen einer Masse in eine Pressform. Dabei kann die Pressform auf 100-300 °C, bevorzugter auf 200 °C erhitzt sein. Sie kann zudem einen Druck von 1000-10.000 N/cm², bevorzugter 2000-5000 N/cm², noch bevorzugter 2500-4000 N/cm² ausüben. Das Pressen kann für 5-250 s, bevorzugter 10-100 s, bevorzugter 30 s geschehen.

In manchen Ausführungsformen geschieht das Formen durch Einspritzen einer Masse in eine Spritzgussform. Die Spritzgussform kann hierbei auf 100-300 °C, bevorzugter auf 200 °C erhitzt sein.

Beispielhafte Verfahren für das Formen der zweiten Schicht zu Seitenwand und Becher sind das Hotpressverfahren und das Spritzgussverfahren. Es kann auch jedes andere Gussverfahren zum Einsatz kommen, bei dem die Gussform beheizt wird und Wasser entweichen kann.

### Schritt c

In diesem Schritt wird der in Schritt b) geformte Becher ausgehärtet.

### Schritt d

In diesem Schritt wird pflanzliches Wachs oder Naturkautschuk für die erste Schicht der Seitenwand bereitgestellt. Das Wachs bzw. Naturkautschuk hat dabei die Eigenschaften, die oben für die erste Schicht der Seitenwand des Bechers beschrieben sind.

### Schritt e

In diesem Schritt wird die zweite Schicht mit der ersten Schicht beschichtet. Die Beschichtung erfolgt in bevorzugten Ausführungsformen durch Besprühen der zweiten Schicht mit dem Material der ersten Schicht. Die kann zum Beispiel durch Schlitzdüsen-Beschichtung erfolgen. In anderen Ausführungsformen erfolgte die Beschichtung durch Bestreichen oder Benetzen der zweiten Schicht mit dem Material der ersten Schicht. In manchen Ausführungsformen erfolgt die Beschichtung durch Einsatz einer Zentrifuge.

### Weitere Verfahrensschritte

Alle Varianten des Verfahrens können in manchen Ausführungsformen weitere Schritte umfassen. Beispielhafte weitere Schritte sind im Folgenden aufgeführt.

In manchen Ausführungsformen wird die Seitenwand des Bechers bedruckt. Dies kann bei der ersten Variante geschehen, indem die erste Cellulosehydrat-Schicht bedruckt wird. Es wird vorzugsweise die zweite Schicht bedruckt. Bei den Verfahren, bei denen ein Primermaterial aufgetragen wird, kann das Bedrucken vor oder nach dem Auftragen des Primermaterials stattfinden. Zum Bedrucken können alle dem Fachmann bekannten geeigneten Druckverfahren verwendet werden, z.B. Flexodruckverfahren oder Laserdruckverfahren. Dabei können etwa eine Druckmaschine von Guowei, GWR, oder Hangzhou Colon Machinery Co., Ltd., Modell CL-DC850, zum Einsatz kommen. Der Druck erfolgt bevorzugt mit ungiftigen Farben. In besonders bevorzugten Ausführungsformen wird Lebensmittelfarbe zum Drucken verwendet.

In anderen Ausführungsformen wird statt des Bedruckens des Bechers ein Logo oder Schriftzug während der Herstellung des Bechers "eingebacken". Bei Pressverfahren oder Gussverfahren geschieht dies durch eine Pressform/Gussform, die das Logo/den Schriftzug einprägt. Somit kann Bedrucken entfallen. Dies kann Kosten sparen und durch den einen geringeren Verbrauch von Farbe umweltfreundlich sein.

### Deckel

Becher haben oft Deckel, damit die Flüssigkeit bzw. der Inhalt nicht verschüttet werden kann. Daher stellt die vorliegende Erfindung auch Deckel bereit.

### Material

Ein Deckel der vorliegenden Erfindung besteht aus dem Material, das oben für die Seitenwand des Bechers beschrieben ist. Somit umfasst der Deckel der vorliegenden Erfindung eine erste Schicht, die aus Cellulosehydrat besteht, wobei die erste Schicht mit einem Primermaterial beschichtet ist. Auch alle weiteren unter "b) Seitenwand" beschriebenen Ausführungsformen können auf das Material des Deckels übertragen werden. Als Alternative zu Cellulosehydrat mit Primer-Beschichtung umfasst der Deckel der vorliegenden Erfindung eine erste Schicht, die aus Naturkautschuk oder pflanzlichem Wachs besteht, und eine zweite Schicht aus einem Faser/Zellstoff-Stärke-Mix.

Auch hier lassen sich die oben für die Seitenwand des alternativen Bechers beschriebenen Ausführungsformen übertragen.

Wie oben für Cellulosehydrat mit Primer-Beschichtung als auch für die alternative erste Schicht beschrieben, umfasst der Deckel der vorliegenden Erfindung in manchen Ausführungsformen zudem Magnesiumstearat.

So ist der Deckel kompostierbar und/oder vollständig biologisch abbaubar.

### Kombination von Becher und Deckel

Becher und Deckel der vorliegenden Erfindung können kombiniert werden gebildet werden.

Somit umfasst die vorliegende Erfindung auch ein Verfahren zur Herstellung einer Kombination von Becher und Deckel, gebildet aus einem Becher der vorliegenden Erfindung und einem Deckel der vorliegenden Erfindung.

In manchen Ausführungsformen lassen sich Deckel und Becher mit einem Schraubsystem verbinden. Hierbei kann der Becher die "Schraube" und der Deckel die "Mutter" sein, oder umgekehrt. Dafür werden Hervorhebungen und Einkerbungen in Becher und Deckel eingefügt, die ein Gewinde bilden. Das Einfügen der Hervorhebungen und Einkerbungen des Gewindes kann während der Herstellung von Becher und Deckel geschehen oder zu einem späteren Zeitpunkt.

In anderen Ausführungsformen kommt ein "Klicksystem" zum Einsatz, bei dem eine Hervorhebung des Deckels in eine Einkerbung des Bechers einrastet, oder umgekehrt. Das Einfügen der Hervorhebungen und Einkerbungen kann während der Herstellung von Becher und Deckel geschehen oder zu einem späteren Zeitpunkt.

In besonders bevorzugten Ausführungsformen kommen Schraubsystem oder Klicksystem bei Bechern und Deckeln mit einer ersten Schicht aus Naturkautschuk zum Einsatz. Naturkautschuk führt zu erhöhtem Widerstand im Schraubsystem oder Klicksystem, was ein besseres Verschließen des Bechers ermöglicht.

Beispielhafte Deckel der Becher der vorliegenden Erfindung bestehen aus einer ersten WachsSchicht oder Kautschuk-Schicht, die mit Sprühdosen oder in einem Tauchbecken aufgetragen werden und einer zweiten Schicht aus Zellstoff und/oder Stärke und optional Magnesiumstearat.

Gemäss dem beanspruchten Verfahren werden Becher und Deckel durch ein Pressverfahren oder Gussverfahren hergestellt (siehe z.B. Beispiele 12-16). In besonders bevorzugten Ausführungsformen werden Becher und Deckel durch ein Pressverfahren oder Gussverfahren hergestellt und umfassen Magnesiumstearat.

### Beispiele:

Die vorliegende Erfindung wird durch die nachfolgenden, nicht einschränkenden Beispiele, detailliert beschrieben.

### Beispiel 1: Herstellung eines transparenten Cellophan (Cellulosehydrat) -Bechers mit Primerbeschichtung

Zur Herstellung des Bechers wurde eine kommerziell erhältliche Cellophan-Folie mit einer Dicke von 1mm und einer Breite von 86 cm verwendet.

Eine Rolle dieser Cellophan-Folie wurde in eine Druckmaschine von Guowei, GWR, eingelegt. Durch Flexodruckverfahren wurde das Design für die Seitenwand auf die Cellophan-Folie gedruckt. Danach wurde ein auf Hitze reagierender Primer als Nassfilm auf die Rolle Cellophan aufgetragen. Dies erfolgte mittels Schlitzdüsen-Beschichtung, über einen Gießkopf mit Verteilkammer.

Anschließend wurde die bedruckte und mit Primer beschichtete Cellophan-Folie in eine Stanz-Maschine von Hangzhou Colon Machinery Co., Ltd., Model CL-DC850, gelegt. Aus der Folie wurden Fächer für die Seitenwand des Bechers gestanzt.

Im nächsten Schritt wurden die gestanzten Fächer und eine 15 cm breite Cellophan-Rolle in die Magazine einer Becher-Form Maschine von SHANGHAI MENGJI INDUSTRIAL CO., LTD, Modell MJ-SL12, eingelegt. Diese Maschine wickelte den gestanzten Cellophan-Fächer um einen metallischen Zylinder und verschweißte ihn anschließend durch Erhitzten metallischer Mulden, um die Seitenwand des Bechers zu formen. Zeitgleich wurde aus der Cellophan-Rolle der kreisförmige Becher-Boden gestanzt. Der Becher-Boden wurde nun mittels der beheizten metallischen Mulden mit der Seitenwand verbunden. Schließlich wurde die obere Becher-Kante eingerollt, um eine Lockenlippe zu formen.

Die fertigen Becher hatten ein Volumen von 500 ml. Sie wurden gestapelt und nach Hygienevorschriften verpackt.

### Beispiel 2: Herstellung eines Pappbechers mit Cellophan- Beschichtung

Zur Herstellung des Bechers wurde eine Rolle Papier verwendet. Das Papier hatte eine Grammatur von 220 g/m² und eine Breite von 86 cm.

Die Rolle Papier wurde in die Druckmaschine von Guowei, GWR, eingelegt. Durch Laserdruckverfahren wurde das Design für die Seitenwand auf das Papier gedruckt.

Anschließend wurden die bedruckte Rolle Papier und eine Cellophan-Rolle mit einer Dicke von 23 µm in die Laminiermaschine ABGloss GmbH Grafische Maschinen CH-6330 Gloss Star 500S eingelegt. Im folgenden Prozess wurden das Papier und das Cellophan mit einem Primer verbunden. Dafür wurde ein auf Hitze reagierender Primer als Nassfilm auf das Papier aufgetragen. Dies erfolgte mittels Schlitzdüsen-Beschichtung, über einen Gießkopf mit Verteilkammer. Daraufhin wurden das mit Primer beschichtete Papier und die Cellophan-Folie zueinander geführt und von zwei beheizten metallischen Zylindern bei 120C° mit einem Druck von 3000 N/cm² verpresst.

Als Primer wurde ein veganer, säurefreier, kristallklarer Kleber ohne Lösungsmittel verwendet. Er bestand aus Gummi Arabicum, Kartoffelstärke (aus kontrolliert biologischem Anbau, kbA^{∗}) und Wasser.

Anschließend wurde das Verbundmaterial aus Papier und Cellophan in eine Stanz-Maschine von Hangzhou Colon Machinery Co., Ltd., Modell CL-DC850, gelegt. Aus dem Material wurden Fächer für die Seitenwand des Bechers gestanzt.

Im nächsten Schritt wurden die gestanzten Fächer und eine 15 cm breite mit Cellophan beschichtete Papp-Rolle in die Magazine einer Becher-Form Maschine von SHANGHAI MENGJI INDUSTRIAL CO., LTD, Modell MJ-SL12, eingelegt. Diese Maschine wickelte den gestanzten Fächer um einen metallischen Zylinder und verschweißte ihn anschließend durch Erhitzten metallischer Mulden auf 120 °C, um die Seitenwand des Bechers zu formen. Zeitgleich wurde aus der mit Cellophan beschichteten Papp-Rolle der kreisförmige Becher-Boden gestanzt. Der Becher-Boden wurde nun mittels der beheizten metallischen Mulden (120 °C) mit der Seitenwand verbunden. Schließlich wurde die obere Becher-Kante eingerollt, um eine Lockenlippe zu formen.

Die fertigen Becher wurden gestapelt und nach Hygienevorschriften verpackt.

### Beispiel 3: Herstellung eines Pappbechers mit Cellophan- Beschichtung mit einem Sichtfenster

Zur Herstellung des Bechers wurde eine Rolle Papier verwendet. Das Papier hatte eine Grammatur von 160 g/m² und eine Breite von 86 cm.

Die Rolle Papier wurde in die Druckmaschine von Guowei, GWR, eingelegt. Durch Flexodruckverfahren wurde das Design für die Seitenwand auf das Papier gedruckt.

Anschließend wurde die bedruckte Papp-Rolle in eine Stanz-Maschine von Hangzhou Colon Machinery Co., Ltd., Modell CL-DC850, eingelegt und ein Sichtfenster mit 1,5 cm Breite und 5 cm Länge ausgestanzte.

Danach wurde das Papier wie in Beispiel 2 beschrieben mit einem Primer (veganer Klebstoff aus Gummi Arabicum, Kartoffelstärke und Wasser) besprüht und mit einer Cellophan-Folie verbunden. Auch die weitere Herstellung des Bechers erfolgte wie in Beispiel 2.

### Beispiel 4: Herstellung eines Pappbechers mit Cellophan-Beschichtung mit drei Sichtfenstern

Zur Herstellung des Bechers wurde eine Rolle Papier verwendet. Das Papier hatte eine Grammatur von 180 g/m² und eine Breite von 86 cm.

Die Rolle Papier wurde in die Druckmaschine von Guowei, GWR, eingelegt. Durch Flexodruckverfahren wurde das Design für die Seitenwand auf das Papier gedruckt.

Anschließend wurde die bedruckte Papp-Rolle in eine Stanz-Maschine von Hangzhou Colon Machinery Co., Ltd., Modell CL-DC850, eingelegt, welche drei kreisförmige Sichtfenster mit einem Durchmesser von 3 cm ausstanzte.

Danach wurde das Papier wie in Beispiel 2 beschrieben mit einem Primer (veganer Klebstoff aus Gummi Arabicum, Kartoffelstärke und Wasser) besprüht und mit einer Cellophan-Folie verbunden. Auch die weitere Herstellung des Bechers erfolgte wie in Beispiel 2.

### Beispiel 5: Herstellung Pappbecher aus Holzstoff mit Cellophan-Beschichtung mit einem Sichtfenster

Zur Herstellung des Bechers wurde eine Rolle Papier aus Holzstoff verwendet. Das Papier hatte eine Grammatur von 160 g/m² und eine Breite von 86 cm.

Die Rolle Papier wurde in die Druckmaschine von Guowei, GWR, eingelegt. Durch Flexodruckverfahren wurde das Design für die Seitenwand auf das Papier gedruckt.

Anschließend wurde die bedruckte Papp-Rolle in eine Stanz-Maschine von Hangzhou Colon Machinery Co., Ltd., Modell CL-DC850, eingelegt und ein Sichtfenster mit 1 cm Breite und 6 cm Länge ausgestanzte.

Danach wurde das Papier aus Holzstoff wie in Beispiel 2 beschrieben mit einem Primer (veganer Klebstoff aus Gummi Arabicum, Kartoffelstärke und Wasser) besprüht und mit einer Cellophan-Folie verbunden. Auch die weitere Herstellung des Bechers erfolgte wie in Beispiel 2.

### Beispiel 6: Herstellung eines transparenten doppellagigen Cellophan-Bechers

Zur Herstellung des Bechers wurde eine kommerziell erhältliche Cellophan-Folie mit einer Dicke von 1mm und einer Breite von 86 cm verwendet.

Eine Rolle dieser Cellophan-Folie wurde in eine Druckmaschine von Guowei, GWR, eingelegt. Durch Flexodruckverfahren wurde das Design für die Seitenwand auf die Cellophan-Folie gedruckt.

Anschließend wurden die bedruckte Cellophan-Rolle und eine weitere Cellophan-Rolle mit einer Dicke von 23 µm in die Laminiermaschine ABGloss GmbH Grafische Maschinen CH-6330 Gloss Star 500S eingelegt. Im folgenden Prozess wurden die beiden Cellophan-Folien mit einem Primer verbunden. Als Primer wurden wahlweise eine Kombination von Gummi arabicum, Kartoffelstärke und Wasser oder Gummi arabicum, Maisstärke und Wasser verwendet. Der Primer wurde als Nassfilm auf die die bedruckte Cellophan-Folie aufgetragen. Dies erfolgte mittels Schlitzdüsen-Beschichtung, über einen Gießkopf mit Verteilkammer. Daraufhin wurden die mit Primer beschichtete Cellophan-Folie und die andere Cellophan-Folie zueinander geführt und verpresst.

Anschließend wurde das Verbundmaterial aus den beiden Cellophan-Folien in eine Stanz-Maschine von Hangzhou Colon Machinery Co., Ltd., Modell CL-DC850, gelegt. Aus dem Material wurden Fächer für die Seitenwand des Bechers gestanzt.

Im nächsten Schritt wurden die gestanzten Fächer und eine 15 cm breite Cellophan-Rolle, die aus zwei mit dem Primer verbundenen Cellophan-Schichten bestand, in die Magazine einer Becher-Form Maschine von SHANGHAI MENGJI INDUSTRIAL CO., LTD, Modell MJ-SL12, eingelegt. Diese Maschine wickelte den gestanzten Fächer um einen metallischen Zylinder und verschweißte ihn anschließend durch Erhitzten metallischer Mulden auf 120 °C, um die Seitenwand des Bechers zu formen. Zeitgleich wurde aus der 15 cm breiten Cellophan-Rolle der kreisförmige Becher-Boden gestanzt. Der Becher-Boden wurde nun mittels der beheizten metallischen Mulden (120 °C) mit der Seitenwand verbunden. Schließlich wurde die obere Becher-Kante eingerollt, um eine Lockenlippe zu formen.

Die fertigen Becher hatten ein Volumen von 350 ml. Sie wurden gestapelt und nach Hygienevorschriften verpackt.

### Beispiel 7: Herstellung eines Bechers mit Pflanzenstärke-Anteil mit Cellophan-Beschichtung

### im Hotpress-Verfahren.

Hier wurde der Becher aus einem aus Zellstoff und Pflanzenstärke verwendet. Zur Herstellung des Bechers wurden 8% Zellstoff, 91,5% Kartoffelstärke und 0,5% Konservierungsstoffe in eine Knetmaschine, Modell Spiralkneter KM 120T, gegeben. Die gesamte Trockenmasse hatte ein Gewicht von 40 Kilogramm. Zudem wurden 24 Liter Wasser hinzugefügt, somit wurde ein Gesamtgewicht von 64 Kilogramm erreicht. Die Maschine knetete die Mixtur in 20 Minuten zu einer homogenen Masse. Die Masse wurde anschließend mittels Dosierlöffel in kugelförmige 25 Gramm-Portionen separiert. Anschließend wurden die Portionen der Masse auf ein Laufband gelegt, welches sie in die auf 200 °C erhitzten Hohlräume einer Pressform beförderte. Die Pressform schloss sich mit einem Druck von 3500 N/cm² für 30 Sekunden. Durch den Druck erlangte die Masse die von der Pressform vorgegebene Becher-Form. Hierbei diente die hohe Temperatur dem Aushärtevorgang der Masse, der Wasseranteil der Masse entwich in Gasform. Nach dem Pressvorgang wurde der geformte Becher aus der Form genommen.

Anschließend wurde der Becher in eine hydraulische Stanzpresse gelegt, welche durch Bedienen des Druckkolbens betätigt wurde. Hierbei wurde im oberen Teil des Bechers ein vertikales Sichtfenster heraus gestanzt. Dieses befand sich 0,5cm unter der Lippe und wies eine Breite von 2 cm und eine Länge von 8 cm auf.

Daraufhin wurde der Becher in eine Tampondruckmaschine (SCDEL TIC 301) gelegt und mit einem Logo bedruckt.

Danach wurde der Becher mittels Sprühdüsen mit einem Primer aus Gummi arabicum, Tapiokastärke und Wasser besprüht. Zeitgleich wurde eine zugeschnittene Cellophan-Folie (1,2 mm Dicke) in eine Formpresse gelegt und mit einem Druck von 2000 N/cm² für 5 Sekunden verpresst. Diese durch Pressen vorgeformte Cellophan-Folie wurde anschließend entnommen und in den davor hergestellten Zellstoff/Stärke-Becher gelegt. Becher und Cellophan-Folie wurden in einen auf 100 °C erhitzten Hohlraum einer Pressmaschine eingelegt. Die Pressform schloss sich mit einem Druck von 3500 N/cm² und verpresste Becher und vorgeformte Cellophan-Folie für 15 Sekunden. Hierbei verband der davor aufgesprühte Primer den Becher und die vorgeformte Cellophan-Folie miteinander. Das Cellophan passte sich durch die Einwirkung von Druck und Hitze der Innenwand des Zellstoff/Stärke-Bechers an.

Die fertigen Becher wurden gestapelt und nach Hygienevorschriften verpackt.

### Beispiel 8: Herstellung eines Bechers mit Pflanzenstärke-Anteil mit Cellophan-Beschichtung im Spritzguss-Verfahren.

Hier wurde der Becher aus einer Masse aus Zellstoff und Pflanzenstärke verwendet, der in die Form eines Bechers gepresst wurde. Zur Herstellung der Masse wurden 12% Zellstoff, 87,5% Maisstärke und 0,5% Konservierungsstoffe in eine Knetmaschine, Modell Kemper ST 125 AE, gegeben. Die gesamte Trockenmasse hatte ein Gewicht von 30 Kilogramm. Zudem wurden 20 Liter Wasser hinzugefügt, somit wurde ein Gesamtgewicht von 50 Kilogramm erreicht. Die Maschine knetete die Mixtur in 25 Minuten zu einer homogenen Masse. Daraufhin wurde die Masse in einen auf Rollen stehenden Tank gepumpt. Der Tank wurde an eine modifizierte Spritzgussanlage mit einem Schlauch angeschlossen.

Die homogene Masse wurde dann in eine sich nach unten verjüngende Spritzeinheit gegossen, die eine rotierende Schnecke und eine Düse an der Spitze enthielt. Die Masse wurde durch Rotieren der Schnecke in Richtung Düse gefördert. Die Masse sammelte sich vor der geschlossenen Düse. Da die Schnecke axial beweglich war, wich sie dem sich vor der Düse aufbauenden Druck aus und schraubte sich ähnlich einem Korkenzieher aus der Masse heraus. Die Rückwärtsbewegung der Schnecke wurde elektrisch gebremst, so dass sich in der Masse ein Staudruck aufbaute. Dieser Staudruck in Verbindung mit der Schneckenrotation verdichtete die Masse. Die Schneckenposition wurde kontinuierlich gemessen, und sobald sich eine für das Bechervolumen ausreichende Materialmenge der Masse angesammelt hatte, war der Dosiervorgang beendet und die Schneckenrotation wurde eingestellt. Ebenso wurde die Schnecke aktiv oder passiv entlastet, so dass die Masse dekomprimiert wurde. In der nun folgenden Einspritzphase wurde die Spritzeinheit an die Schließeinheit einer becherförmigen Spritzgussform gefahren, die Düse wurde an die Spitzgussform angedrückt und die Schnecke rückseitig unter Druck gesetzt. Dadurch wurde die Masse unter hohem Druck (1500 bar) durch die geöffnete Düse und das Angusssystem der Spritzgussform in den formgebenden Hohlraum (geheizt auf 200 °C) der Spritzgussform gedrückt. Eine Rückstromsperre verhinderte dabei ein Zurückströmen der Masse in Richtung Spritzeinheit. Durch das Erhitzen der Masse im Hohlraum entwich der Wasseranteil in Gasform durch die hierfür vorgesehenen Löcher der Spritzgussform. Während des Einspritzens wurde versucht, ein möglichst laminares Fließverhalten der Masse zu erreichen, das heißt, die Masse wurde in der Spritzform dort, wo sie die beheizte Wand der Form berührte, sofort erhitzt und dadurch verfestigt. Die neu eingespritzte Masse wurde mit hoher Geschwindigkeit durch den Einspritzkanal nachgedrückt. Diese hohe Einspritzgeschwindigkeit erzeugte in der Masse eine Schergeschwindigkeit, welche die Masse leichter fließen lässt. Mit der Feinabstimmung der Einspritzphase konnten die Struktur der Oberfläche und das Aussehen des Bechers beeinflusst werden. Nach dem Einspritzen wurde die Düse geschlossen und in der Spritzeinheit konnte der Dosiervorgang für den nächsten Becher beginnen. Das Material in der Spritzgussform kühlte weiter ab, bis auch die Seele, der flüssige Kern des Bechers, ausgehärtet war und die Becher-Endform erreicht hatte. Zum Entformen wurde die Auswerfer-Seite der Spritzgussform geöffnet und der Zellstoff/Stärke-Becher wurde durch in den Hohlraum hineindringende Stifte ausgeworfen. Ein Guss-Zyklus dauerte 25 Sekunden.

Anschließend wurde der Zellstoff/Stärke-Becher in eine hydraulische Stanzpresse gelegt, welche durch Bedienen des Druckkolbens betätigt wurde. Hierbei wurde im oberen Teil des Bechers ein vertikales Sichtfenster gestanzt. Dieses befand sich 0,8 cm unter der Lippe und wies eine Breite von 2,5 cm und eine Länge von 6 cm auf.

Daraufhin wurde der Becher in eine Tampondruckmaschine (SCDEL TIC 301) gelegt und mit einem Logo bedruckt.

Danach wurde der Becher mittels Sprühdüsen mit einem Primer aus Gummi arabicum, Kartoffelstärke und Wasser besprüht. Zeitgleich wurde eine zugeschnittene Cellophan-Folie (1,2 mm Dicke) in eine Formpressegelegt und mit einem Druck von 2000 N/cm² für 5 Sekunden verpresst. Diese durch Pressen vorgeformte Cellophan-Folie wurde anschließend entnommen und in den davor hergestellten Zellstoff/Stärke-Becher gelegt. Becher und Cellophan-Folie wurden in einen auf 100 °C erhitzten Hohlraum einer Pressmaschine eingelegt. Die Pressform schloss sich mit einem Druck von 3500 N/cm² und verpresste Becher und vorgeformte Cellophan-Folie für 15 Sekunden. Hierbei verband der davor aufgesprühte Primer den Becher und die vorgeformte Cellophan-Folie miteinander. Das Cellophan passte sich durch die Einwirkung von Druck und Hitze der Innenwand des Zellstoff/Stärke-Bechers an.

Die fertigen Becher wurden gestapelt und nach Hygienevorschriften verpackt.

Bei anderen Testversuchen wurde die Maisstärke in der Masse zur Herstellung des Zellstoff/Stärke-Bechers durch Kartoffelstärke oder eine Kombination von Maisstärke und Kartoffelstärke ersetzt. Das weitere Verfahren war unverändert.

### Beispiel 9: Herstellung eines Bechers mit Pflanzenstärke-Anteil mit Naturkautschuk-Schicht im Hotpress-Verfahren.

Der Guss eines Bechers aus 9% Zellstoff, 90,5% Kartoffelstärke und 0,5% Konservierungsstoffen erfolgte wie in Beispiel 7 beschrieben nach dem Hotpress-Verfahren. Jedoch wurde nach Ende des Gusses kein Sichtfenster in den Becher gestanzt.

Anschließend wurde der Becher in eine Tampondruckmaschine (SCDEL TIC 301) gelegt und mit einem Logo bedruckt.

Danach wurde der Becher mittels Sprühdüsen mit einer vorvulkanisierter Natur-Latexmilch besprüht. Die Latexmilch hatte einen Ammoniak-Anteil von 0,3%.

Anschließend wurde der Becher an der Luft in einem Zeitraum von 12 Stunden getrocknet.

Die fertigen Becher wurden gestapelt und nach Hygienevorschriften verpackt.

### Beispiel 10: Herstellung eines Bechers mit Pflanzenstärke-Anteil mit Carnauba-WachsSchicht im Spritzguss-Verfahren.

Der Guss eines Bechers aus 12% Zellstoff, 87,5% Maisstärke und 0,5% Konservierungsstoffen erfolgte wie in Beispiel 8 beschrieben nach dem Spritzguss-Verfahren. Jedoch wurde nach Ende des Gusses kein Sichtfenster in den Becher gestanzt.

Anschließend wurde der Becher in eine Tampondruckmaschine (SCDEL TIC 301) gelegt und mit einem Logo bedruckt.

Danach wurde der Becher mittels beheizten (90C°) Sprühdüsen mit Carnauba-Wachs besprüht.

Der Becher wurde innerhalb eines Zeitraums von 6 Stunden luftgetrocknet.

Die fertigen Becher wurden gestapelt und nach Hygienevorschriften verpackt.

### Beispiel 11: Herstellung eines Bechers mit Pflanzenstärke-Anteil mit Carnauba-WachsSchicht im Spritzguss-Verfahren mit Magnesiumstearat.

Der Guss eines Bechers aus 8% Zellstoff, 86,5% Maisstärke, 5% Magnesiumstearat und 0,5% Konservierungsstoffen erfolgte wie in Beispiel 8 beschrieben nach dem Spritzguss-Verfahren. Durch den Einsatz des Magnesiumstearats war der gegossene Becher leichter aus der Form zu lösen als in Beispiel 10. Nach Ende des Gusses wurde kein Sichtfenster in den Becher gestanzt.

Anschließend wurde der Becher in eine Tampondruckmaschine (SCDEL TIC 301) gelegt und mit einem Logo bedruckt.

Danach wurde der Becher mittels beheizten (90C°) Sprühdüsen mit Carnauba-Wachs besprüht.

Der Becher wurde innerhalb eines Zeitraums von 6 Stunden luftgetrocknet.

Die fertigen Becher wurden gestapelt und nach Hygienevorschriften verpackt.

### Beispiel 12: Herstellung eines Deckels und Bechers mit Schraubverschluss mit Pflanzenstärke-Anteil mit Cellophan-Beschichtung im Hotpress-Verfahren.

Hier wurde ein Deckel und ein Becher aus Zellstoff und Pflanzenstärke hergestellt. Eine homogene Masse wurde wie in Beispiel 7 beschrieben hergestellt. Die Masse wurde anschließend mittels Dosierlöffel in eine kugelförmige 25 Gramm-Portion für den Becher und 9 Gramm-Portion für den Deckel separiert. Anschließend wurden die Portionen der Masse auf ein Laufband gelegt, welches sie in die auf 200°C erhitzten Hohlräume einer Pressform beförderte. Die Pressform schloss sich mit einem Druck von 3500 N/cm² für 30 Sekunden. Durch den Druck erlangte die Masse die von der Pressform vorgegebene Becher-Form und Deckel-Form. Hierbei diente die hohe Temperatur dem Aushärtevorgang der Masse, der Wasseranteil der Masse entwich in Gasform aus dem Auslassventil. Durch die Gestalt der Form wurde ein Schraubsystem in Deckel und Becher "eingebacken". Nach dem Pressvorgang wurden der geformte Becher und der Deckel aus der Form genommen.

Danach wurden Becher und Deckel mittels Sprühdüsen mit einer vorvulkanisierter Natur-Latexmilch besprüht. Die Latexmilch hatte einen Ammoniak-Anteil von 0,3%.

Anschließend wurden Becher und Deckel an der Luft in einem Zeitraum von 12 Stunden getrocknet.

Die fertigen Deckel und Becher wurden gestapelt und nach Hygienevorschriften verpackt.

### Beispiel 13: Herstellung eines Deckels und Bechers mit "Klicksystem" und "eingebackenem" Logo und Schriftzug mit Pflanzenstärke-Anteil mit Cellophan-Beschichtung im Spritzguss-Verfahren.

Hier wurden der Deckel und der Becher aus einer Masse aus Zellstoff und Pflanzenstärke hergestellt. Die Masse wurde wie in Bespiel 8 beschrieben hergestellt. Auch der Guss erfolgte wie in Beispiel 8 beschrieben, mit dem Unterschied, dass außer dem Becher auch ein Deckel gegossen wurde. Durch die Gestalt der Form wurden ein "Klicksystem" und ein Logo in Deckel und Becher "eingebacken". Ein Guss-Zyklus dauerte 25 Sekunden.

Danach wurden Becher und Deckel mittels Sprühdüsen mit einer vorvulkanisierter Natur-Latexmilch besprüht. Die Latexmilch hatte einen Ammoniak-Anteil von 0,3%.

Anschließend wurden Becher und Deckel an der Luft in einem Zeitraum von 12 Stunden getrocknet.

Die fertigen Deckel und Becher wurden gestapelt und nach Hygienevorschriften verpackt.

### Beispiel 14: Herstellung eines Bechers im Hotpress-Verfahren.

Hier wurde der Becher aus Material aus Zellstoff und Pflanzenstärke hergestellt, der in die Form eines Bechers gepresst wurde. Zur Herstellung des Materials wurden 5,9% Zellstoff, 52,4% Maisstärke, 0,6% Magnesiumstearat und 41,1 % Wasser (bei 40°C) in einen Mischer gegeben (entsprechend einer Produktzusammensetzung von 89% Maisstärke, 10% Zellstoff, 1% Magnesiumstearat). Zunächst wurde Zellstoff mit Wasser versetzt, um späteres Verklumpen von Zellstoff in der Masse zu verhindern. Die Maschine mischte die Mischung in 20 Minuten zu einer homogenen Masse. Die Masse wurde anschließend mittels eines "Single Screwdriver" in eine längliche Form gedrückt und in 15 Gramm-Portionen portioniert. Anschließend wurden die Portionen der Masse auf ein Förderband befördert, welches sie in die auf 240°C erhitzten Hohlräume der Becher- Pressform beförderte. Die Pressform verlieh jeder Portion der Masse Becher-Form. Nach dem Pressvorgang wurde der geformte Becher mittels Vakuum- Saugknöpfen aus der Form gehoben, so dass kein Zwangs-Entformen nötig war, das das Material brechen lassen würde.

Anschließend wurden die Becher auf das Förderband gehoben, welches die Becher zur Beschichtungs- Maschine beförderte. Die Becher wurden in die Zentrifugen gestellt. Über Spritzdüsen gelangte das Wachs zur Beschichtung in die Becher. Die Bescher wurden schließlich mittels Zentrifugation mit dem aufgetragenen Wachs beschichtet. Überschüssiges Wachs wurde zur weiteren Verwendung wiederaufgefangen. Darauf wurden die Becher mittels Greifarmen gleichzeitig auf den Trocknungs- und UV- Tunnel gesetzt. Die Beschichtung wurde so langsam getrocknet, so dass keine Risse in der Oberflächen Struktur entstehen konnten. Dieser Vorgang wurde zu einem Drittel der Zeit bei 70°C und zu zwei Dritteln der Zeit bei 40°C und 30°C, sowie kontinuierlicher UV-Bestrahlung durchgeführt.

Daraufhin wurde der Becher in eine Tampondruckmaschine (SCDEL TIC 301) gelegt und mit einem Logo bedruckt.

Die fertigen Becher wurden gestapelt und nach Hygienevorschriften verpackt.

### Beispiel 15: Herstellung eines Bechers im Spritzguss-Verfahren

Hier wurden die Becher aus einem Material aus Zellstoff und Pflanzenstärke hergestellt die in die Form eines Bechers gepresst wurde. Zur Herstellung des Materials wurden 7% Zellstoff, 51,5% Maisstärke, 0,3% Magnesiumstearat und 41,1 % Wasser in einen Mischer gegeben (entsprechend einer Produktzusammensetzung von 87,5% Maisstärke, 12% Zellstoff und 0,5% Magnesiumstearat). Zunächst wurde Zellstoff mit Wasser versetzt, um späteres Verklumpen von Zellstoff in der Masse zu verhindern. Die Maschine mischte die Bestandteile des Materials in 15 Minuten zu einer homogenen Masse. Daraufhin wurde die Masse in einen Tank gepumpt. Der Tank wurde an eine modifizierte Spritzgussanlage mit einem Schlauch angeschlossen.

Die homogene Masse wurde in eine sich nach unten verjüngende Spritzeinheit gegossen, die eine rotierende Schnecke und eine Düse an der Spitze enthielt. Die Masse wurde durch Rotieren der Schnecke in Richtung Düse gefördert. Die Masse sammelte sich vor der geschlossenen Düse. Da die Schnecke axial beweglich war, wich sie dem sich vor der Düse aufbauenden Druck aus und schraubte sich ähnlich einem Korkenzieher aus der Masse heraus. Die Rückwärtsbewegung der Schnecke wurde elektrisch gebremst, so dass sich in der Masse ein Staudruck aufbaute. Dieser Staudruck in Verbindung mit der Schneckenrotation verdichtete die Masse. Durch aktives oder passives Entlasten der Schnecke wurde die Masse dekomprimiert. In der nun folgenden wurde die Masse unter hohem Druck (1500 bar) durch die geöffnete Düse und das Angusssystem der Spritzgussform in den formgebenden Hohlraum (geheizt auf 200°C) der Spritzgussform gedrückt. Eine Rückstromsperre verhinderte dabei ein Zurückströmen der Masse in Richtung Spritzeinheit. Durch das Erhitzen der Masse im Hohlraum konnte der Wasseranteil in Gasform entweichen. Während des Einspritzens wurde versucht, ein möglichst laminares Fließverhalten der Masse zu erreichen, das heißt, die Masse wurde in der Spritzform dort, wo sie die beheizte Wand der Form berührte, sofort erhitzt und dadurch verfestigt. Die hohe Einspritzgeschwindigkeit erzeugte in der Masse eine Schergeschwindigkeit, welche die Masse leichter fließen lässt. Mit der Feinabstimmung der Einspritzphase konnten die Struktur der Oberfläche und das Aussehen des Bechers beeinflusst werden. Nach dem Einspritzen wurde die Düse geschlossen und in der Spritzeinheit konnte der Dosiervorgang für den nächsten Becher beginnen. Das Material in der Spritzgussform kühlte weiter ab, bis auch die Seele, der flüssige Kern des Bechers, ausgehärtet war und die Becher-Endform erreicht war. Der Becher wurde anschließend ausgeworfen. Ein Guss-Zyklus dauerte 45 Sekunden.

Daraufhin wurde der Becher in eine Tampondruckmaschine (SCDEL TIC 301) gelegt und mit einem Logo bedruckt.

Über ein Förderband gelangten die Becher zu Sprühdüsen, die diese mit einer Beschichtung aus Gummi arabicum, Kartoffelstärke und Wachs besprühte.

In einem Trocknungs- und UV- Tunnel konnten die Becher bzw. die Beschichtung langsam trocknen, so dass keine Risse in der Oberflächen-Struktur entstanden. Dieser Vorgang wurde zu einem Drittel der Zeit bei 75°C und zu zwei Dritteln der Zeit bei 40°C und 20°C, sowie kontinuierlicher UV-Bestrahlung durchgeführt.

Die fertigen Becher wurden gestapelt und nach Hygienevorschriften verpackt.

### Beispiel 16: Herstellung eines Deckels mit Wachs-Beschichtung im Hotpress-Verfahren

Deckel wurden aus einem Material Zellstoff und Pflanzenstärke hergestellt, der in die Form eines Deckels gepresst wurde. Zur Herstellung des Materials wurden 5,9% Zellstoff, 52,4% Weizenstärke, 0,6% Magnesiumstearat und 41,1 % Wasser (50°C) in einen Mischer gegeben (entsprechend einer Produktzusammensetzung von 89% Weizenstärke, 10% Zellstoff und 1% Magnesiumstearat). Zunächst wurde Zellstoff mit Wasser versetzt, um späteres Verklumpen von Zellstoff in der Masse zu verhindern. Die Maschine mixte die Mixtur in 20 Minuten zu einer homogenen Masse. Die Masse wurde anschließend mittels eines "Single Screwdriver" in eine längliche Form gedrückt und in 8 Gramm-Portionen portioniert. Anschließend wurden die Portionen der Masse auf ein Förderband befördert, welches sie in die auf 240°C erhitzten Hohlräume der Deckel- Pressform beförderte. Durch den Druck erlangte die Masse die von der Pressform vorgegebene Deckel-Form. Hierbei diente die hohe Temperatur dem Aushärtevorgang der Masse, der Wasseranteil der Masse entwich in Gasform. Nach dem Pressvorgang wurde der geformte Deckel mittels Vakuum- Saugknöpfen aus der Form gehoben, so dass kein Zwangs-Entformen nötig war, das das erzeugte Material brechen lassen würde.

Über Förderbänder gelangten die Deckel zu Sprühdüsen und wurden von diesen mit Wachs besprüht Durch Zentrifugation beschichtete das Wachs die Deckel. Überschüssiges Wachs wurde für die weitere Verwendung zurückgeführt. Darauf wurden die Deckel durch den Trocknungs- und UV- Tunnel befördert. Hierbei trocknete die Beschichtung langsam, so dass keine Risse in der Oberflächen-Struktur entstanden. Dieser Vorgang wurde zu einem Drittel der Zeit bei 70°C und zu zwei Dritteln der Zeit bei 40°C und 30°C, sowie kontinuierlicher UV-Bestrahlung durchgeführt.

Die fertigen Deckel wurden gestapelt und nach Hygienevorschriften verpackt.

## Patentansprüche

1. Ein Becher, umfassend
a. einen Boden (1) und
b. eine Seitenwand (2),
wobei die Seitenwand (2) eine erste Schicht (5) umfasst,
wobei die erste Schicht (5) aus Cellulosehydrat besteht,
wobei die erste Schicht mit einem Primermaterial (4) beschichtet ist,
wobei die Seitenwand (2) außerdem eine zweite Schicht (3) umfasst,
wobei die erste Schicht (5) und die zweite Schicht (3) durch das Primermaterial (4) verbunden sind und
wobei die zweite Schicht (3) Cellulosehydrat, Papier, Pappe, Zellstoff, Faserstoff, Stärke oder eine Mischung davon umfasst,
wobei die Seitenwand (2) des Bechers wasserundurchlässig ist,
wobei die erste Schicht (5) die innere Schicht des Bechers ist und die zweite Schicht (3) die äußere Schicht des Bechers ist und
wobei der Becher kompostierbar und/oder vollständig biologisch abbaubar ist,
**dadurch gekennzeichnet, dass** der Becher aus rein pflanzlichen Materialien besteht.

2. Der Becher von Anspruch 1, wobei das Primermaterial (4) Gummi arabicum, Kartoffelstärke, Maisstärke oder Tapiokastärke; oder Stärke aus Maniok, Knollenbohne, Batate, Yamswurzel, Knollen-Platterbse, Arakacha, Knolligem Sauerklee, Knolliger Kapuzinerkresse, Ulluco, Ostindischer Pfeilwurz, Pfeilwurz, Achira, Taro, Tannia, Weißer Seerose, Gelber Teichrose oder Chayote umfasst.

3. Der Becher von Anspruch 1 oder 2, wobei das Primermaterial Gummi arabicum und Stärke umfasst, wobei die Stärke vorzugsweise Kartoffelstärke oder Maisstärke ist.

4. Der Becher nach einem der Ansprüche 1-3, wobei die zweite Schicht (3) Zellstoff und/oder Faserstoff umfasst und wobei die zweite Schicht (3) außerdem Magnesiumstearat umfasst.

5. Der Becher nach einem der vorhergehenden Ansprüche, wobei die zweite Schicht (3) zumindest teilweise aus Baobab-Pflanzenmaterial hergestellt ist.

6. Der Becher nach einem der vorhergehenden Ansprüche, wobei der Boden (1) Cellulosehydrat umfasst.

7. Der Becher nach einem der vorhergehenden Ansprüche, wobei der Becher mindestens ein Sichtfenster (6) umfasst, optional wobei der Becher vollständig transparent ist.

8. Ein Verfahren zur Herstellung eines Bechers nach einem der Ansprüche 1-7, umfassend einen Boden (1) und eine Seitenwand (2), wobei das Verfahren die folgenden Schritte umfasst:
a. Bereitstellen eines zweiten Materials für eine zweite Schicht (3) der Seitenwand (2) des Bechers und des Bodens (1) des Bechers,
i. wobei das zweite Material Cellulosehydrat, Papier, Pappe, Zellstoff, Faserstoff, Stärke oder eine Mischung davon umfasst,
b. Formen des zweiten Materials, um diesem die Form eines Bechers, umfassend Seitenwand und Boden, zu geben,
c. Beschichten des zweiten Materials mit einem rein pflanzlichen Primermaterial (4),
d. Bereitstellen eines ersten Materials für eine erste Schicht (5) der Seitenwand (2) des Bechers und des Bodens (1) des Bechers,
i. wobei das erste Material Cellulosehydrat ist,
e. Formen des ersten Materials, um diesem die Form eines Bechers, umfassend Seitenwand und Boden, zu geben,
f. Verbinden des ersten und des zweiten Materials, zumindest teilweise mittels des Primermaterials (4).

9. Das Verfahren -nach Anspruch 8, wobei das Verfahren außerdem das Stanzen eines Sichtfensters (6) in das zweite Material und/oder das Bedrucken des ersten Materials und/oder des zweiten Materials umfasst.

10. Ein Becher, umfassend
a. einen Boden (1) und
b. eine Seitenwand (2),
wobei die Seitenwand (2) eine erste Schicht (5) und eine zweite Schicht (3) umfasst,
wobei die erste Schicht (5) aus Naturkautschuk oder pflanzlichem Wachs besteht,
**dadurch gekennzeichnet, dass** die zweite Schicht (3) eine Mischung aus Zellstoff und/oder Faserstoff
und Stärke umfasst und
wobei der Becher aus rein pflanzlichen Materialien besteht.

11. Der Becher nach Anspruch 10, wobei die zweite Schicht (3) zusätzlich Magnesiumstearat umfasst.

12. Ein Becher nach einem der Ansprüche 10 oder 11, wobei der Boden aus dem gleichen Material besteht wie die Seitenwand und Boden und Seitenwand aus einem Stück bestehen.

13. Ein Deckel zur Verwendung mit einem Becher, wobei der Deckel aus dem Material der Seitenwand wie in einem der Ansprüche 1-7 oder aus dem Material der Seitenwand wie in einem der Ansprüche 10-12 definiert besteht.

14. Ein Verfahren zur Herstellung eines Bechers, umfassend einen Boden (1) und eine Seitenwand (2), wobei das Verfahren die folgenden Schritte umfasst:
a. Bereitstellen eines zweiten Materials für eine zweite Schicht (3) der Seitenwand (2) des Bechers und des Bodens (1) des Bechers,
i. wobei das zweite Material eine Mischung aus Zellstoff und/oder Faserstoff und Stärke und zusätzlich Wasser umfasst,
b. Formen des zweiten Materials, um diesem die Form eines Bechers, umfassend Seitenwand und Boden, zu geben,
c. Aushärten des zweiten Materials,
d. Bereitstellen eines ersten Materials für eine erste Schicht der Seitenwand (2) des Bechers und des Bodens (1) des Bechers,
i. wobei das erste Material Naturkautschuk oder pflanzliches Wachs umfasst, bevorzugt Carnaubawachs,
e. Beschichten der zweiten Schicht (3) der Seitenwand (2) des Bechers und des Bodens (1) des Bechers aus dem zweiten Material mit dem ersten Material und somit erzeugen der ersten Schicht (5) der Seitenwand (2) des Bechers und des Bodens (1) des Bechers.

15. Das Verfahren nach Anspruch 14, wobei Schritt e) in einer Zentrifuge durchgeführt wird.

16. Das Verfahren nach einem der Ansprüche 14-15, wobei Schritt c) in einem Trocknungstunnel durchgeführt wird.

17. Ein Verfahren zur Herstellung eines Deckels nach Anspruch 13, wobei das Verfahren dem Verfahren der Herstellung eines Bechers, umfassend die Schritte a)-e) wie in den Ansprüchen 14-16 definiert, entspricht.

18. Ein Verfahren zur Herstellung einer Kombination aus Becher und Deckel wobei Becher und Deckel jeweils entweder aus dem Material der Seitenwand (2) nach einem der Ansprüche 1-5 oder aus dem Material der Seitenwand (2) nach einem der Ansprüche 10 und 11 ausgebildet ist, wobei Becher und Deckel durch ein Pressverfahren oder Gussverfahren hergestellt werden, vorzugsweise wobei Becher und Deckel Magnesiumstearat umfassen.

## Claims

1. A cup comprising:
a bottom (1) and
a side wall (2)
wherein the side wall (2) comprises a first layer (5),
wherein the first layer (5) consists of cellulose hydrate,
wherein the first layer is coated with a primer material (4),
wherein the side wall (2) further comprises a second layer (3),
wherein the first layer (5) and the second layer (3) are bonded together by the primer material (4),
wherein the second layer (3) comprises cellulose hydrate, paper, cardboard, pulp, fiber, starch or a mixture thereof,
wherein the side wall (2) of the cup is impermeable to water,
wherein the first layer (5) is the inner layer of the cup and the second layer (3) is the outer layer of the cup, and
wherein the cup is compostable and/or fully biodegradable,
**characterized in that** the cup consists of only plant-based material.

2. The cup according to claim 1, wherein the primer material (4) comprises arabic gum, potato starch, corn starch or tapioca starch, or starch derived from cassava, tuberous bean, batata, yam, tuberous pea, arakacha, tuberous wood sorrel, tuberous nasturtium, ulluco, East Indian arrowroot, arrowroot, achira, taro, tannia, white water lily, yellow pond rose, or chayote.

3. The cup according to claim 1 or 2, wherein the primer material comprises arabic gum and starch, wherein the starch is preferably potato starch or cornstarch.

4. The cup according to any one of claims 1-3, wherein the second layer (3) comprises pulp and/or fiber and wherein the second layer (3) further comprises magnesium stearate.

5. The cup according to any of the preceding claims, wherein the second layer (3) is at least partially made of baobab plant material.

6. The cup according to according to any of the preceding claims, wherein the bottom (1) comprises cellulose hydrate.

7. The cup according to according to any of the preceding claims, wherein the cup comprises at least one viewing window (6), optionally wherein the cup is completely transparent.

8. A method of manufacturing the cup according to any of claims 1-7, comprising a bottom (1) and a side wall (2), wherein the method comprises the following steps:
a. providing a second material for a second layer (3) of the side wall (2) of the cup and the bottom (1) of the cup,
i. wherein the second material comprises cellulose hydrate, paper, cardboard, pulp, fiber, starch, or a mixture thereof;
b. forming the second material to shape a cup comprising side wall and bottom,
c. coating the second material with a purely plant-based primer material (4),
d. providing a first material for a first layer (5) of the side wall (2) of the cup and the bottom (1) of the cup,
i. wherein the first material is cellulose hydrate,
e. forming the first material to shape a cup comprising side wall and bottom ,
f. bonding the first material and the second material at least partially by the primer material (4).

9. The method according to claim 8, wherein the method further comprises punching of a viewing window (6) into the second material and/or printing the first material and/or the second material.

10. A cup comprising
a bottom (1), and
a side wall (2),
wherein the side wall (2) comprises a first layer (5) and a second layer (3),
wherein the first layer (5) consists of natural rubber or plant-based wax,
**characterized in that** the second layer (3) comprises a mixture of pulp and/or fiber and starch, and
wherein the cup consists only of plant-based materials.

11. The cup according to claim 10, wherein the second layer (3) further comprises magnesium stearate.

12. A cup according to any of claims 10 or 11, wherein the bottom is made of the same material as the side wall and bottom and side wall are made of one piece.

13. A lid for use in combination with a cup, wherein the lid is made of the side wall material as defined in any one of claims 1-7 or the side wall material as defined in any of claims 10-12.

14. A method of manufacturing a cup comprising a bottom (1) and a side wall (2), wherein the method comprises the following steps:
a. providing a second material for a second layer (3) of the side wall (2) of the cup and the bottom (1) of the cup,
i. wherein the second material comprises a mixture of pulp and/or fiber and starch and additionally water,
b. forming the second material to shape a cup comprising side wall and bottom,
c. curing the second material,
d. providing a first material for a first layer of the side wall (2) of the cup and the bottom (1) of the cup,
i. wherein the first material comprises natural rubber or plant-based wax, preferably carnauba wax,
e. coating the second layer (3) of the side wall (2) of the cup and the bottom (1) of the cup of the second material with the first material, thereby producing the first layer (5) of the side wall (2) of the cup and the bottom (1) of the cup.

15. The method according to claim 14, wherein step e) is performed in a centrifuge.

16. The method according to any of claims 14-15, wherein step c) is performed in a drying tunnel.

17. A method of manufacturing a lid according to claim 13, wherein the method corresponds to the method of manufacturing a cup comprising steps a)-e) as defined in claims 14-16.

18. A method of manufacturing a combination of cup and lid, wherein cup and lid are each formed from either the side wall (2) material according to any of claims 1-5 or the side wall (2) material according to any of claims 10 and 11, wherein cup and lid are manufactured by a pressing process or casting process, preferably wherein cup and lid comprise magnesium stearate.

## Revendications

1. Gobelet, comprenant
a. un fond (1) et
b. une paroi latérale (2),
dans lequel la paroi latérale (2) comprend une première couche (5),
dans lequel la première couche (5) est constituée d'hydrate de cellulose, dans lequel la première couche est revêtue d'un matériau d'apprêt (4), dans lequel la paroi latérale (2) comprend par ailleurs une deuxième couche (3),
dans lequel la première couche (5) et la deuxième couche (3) sont reliées par le matériau d'apprêt (4), et
dans lequel la deuxième couche (3) comprend de l'hydrate de cellulose, du papier, du carton, de la cellulose, de la matière fibreuse, de l'amidon ou un mélange de ceux-ci,
dans lequel la paroi latérale (2) du gobelet est imperméable à l'eau,
dans lequel la première couche (5) est la couche intérieure du gobelet et la deuxième couche (3) est la couche extérieure du gobelet, et
dans lequel le gobelet est compostable et/ou totalement biodégradable, **caractérisé en ce que**
le gobelet est constitué de matières purement végétales.

2. Gobelet selon la revendication 1, dans lequel le matériau d'apprêt (4) comprend de la gomme arabique, de l'amidon de pomme de terre, de l'amidon de maïs ou de l'amidon de tapioca ; ou de l'amidon issu du manioc, du pois patate, de la patate douce, de l'igname, de la gesse tubéreuse, de l'arracacha, de l'oseille tubéreuse, de la capucine tubéreuse, de l'ulluco, de la marante indienne, de la marante, de l'achira, du taro, du macabo, du nénuphar blanc, du nénuphar jaune ou de la chayotte.

3. Gobelet selon la revendication 1 ou 2, dans lequel le matériau d'apprêt comprend de la gomme arabique et de l'amidon, dans lequel l'amidon est de préférence de l'amidon de pomme de terre ou de l'amidon de maïs.

4. Gobelet selon l'une quelconque des revendications 1 - 3, dans lequel la deuxième couche (3) comprend de la cellulose et/ou de la matière fibreuse et dans lequel la deuxième couche (3) comprend par ailleurs du stéarate de magnésium.

5. Gobelet selon l'une quelconque des revendications précédentes, dans lequel la deuxième couche (3) est fabriquée au moins en partie à partir d'une matière végétale à base de baobab.

6. Gobelet selon l'une quelconque des revendications précédentes, dans lequel le fond (1) comprend de l'hydrate de cellulose.

7. Gobelet selon l'une quelconque des revendications précédentes, dans lequel le gobelet comprend au moins une fenêtre d'inspection (6), en option dans lequel le gobelet est totalement transparent.

8. Procédé de fabrication d'un gobelet selon l'une quelconque des revendications 1 - 7, comprenant un fond (1) et une paroi latérale (2), dans lequel le procédé comprend les étapes suivantes :
a. de fourniture d'un deuxième matériau pour une deuxième couche (3) de la paroi latérale (2) du gobelet et du fond (1) du gobelet,
- i. dans lequel le deuxième matériau comprend de l'hydrate de cellulose, du papier, du carton, de la cellulose, de la matière fibreuse, de l'amidon ou un mélange de ceux-ci,
b. de façonnage du deuxième matériau pour lui donner la forme d'un gobelet, comprenant une paroi latérale et un fond,
c. de revêtement du deuxième matériau avec un matériau d'apprêt (4) purement végétal,
d. de fourniture d'un premier matériau pour une première couche (5) de la paroi latérale (2) du gobelet et du fond (1) du gobelet,
- i. dans lequel le premier matériau est de l'hydrate de cellulose,
e. de façonnage du premier matériau pour lui donner la forme d'un gobelet, comprenant une paroi latérale et un fond,
f. de liaison du premier et du deuxième matériau au moins en partie au moyen du matériau d'apprêt (4).

9. Procédé selon la revendication 8, dans lequel le procédé comprend par ailleurs le découpage d'une fenêtre d'inspection (6) dans le deuxième matériau et/ou l'impression du premier matériau et/ou du deuxième matériau.

10. Gobelet comprenant
a. un fond (1) et
b. une paroi latérale (2),
dans lequel la paroi latérale (2) comprend une première couche (5) et une deuxième couche (3),
dans lequel la première couche (5) est constituée de caoutchouc naturel ou de cire végétale,
**caractérisé en ce que**
la deuxième couche (3) comprend un mélange composé de cellulose et/ou de matière fibreuse et d'amidon, et
dans lequel le gobelet est constitué de matières purement végétales.

11. Gobelet selon la revendication 10, dans lequel la deuxième couche (3) comprend en supplément du stéarate de magnésium.

12. Gobelet selon l'une quelconque des revendications 10 ou 11, dans lequel le fond est constitué du même matériau que la paroi latérale et le fond et la paroi latérale sont constitués d'une pièce.

13. Couvercle destiné à être utilisé avec un gobelet, dans lequel le couvercle est constitué du matériau de la paroi latérale ainsi que cela est défini dans l'une quelconque des revendications 1 - 7 ou du matériau de la paroi latérale ainsi que cela est défini dans l'une quelconque des revendications 10 - 12.

14. Procédé de fabrication d'un gobelet, comprenant un fond (1) et une paroi latérale (2), dans lequel le procédé comprend les étapes suivantes :
a. de fourniture d'un deuxième matériau pour une deuxième couche (3) de la paroi latérale (2) du gobelet et du fond (1) du gobelet,
- i. dans lequel le deuxième matériau comprend un mélange composé de cellulose et/ou de matière fibreuse et d'amidon et en supplément d'eau,
b. de façonnage du deuxième matériau pour lui donner la forme d'un gobelet comprenant la paroi latérale et le fond,
c. de durcissement du deuxième matériau,
d. de fourniture d'un premier matériau pour une première couche de la paroi latérale (2) du gobelet et du fond (1) du gobelet,
- i. dans lequel le premier matériau comprend du caoutchouc naturel ou de la cire végétale, de manière préférée de la cire de carnauba,
e. de revêtement de la deuxième couche (3) de la paroi latérale (2) du gobelet et du fond (1) du gobelet composé du deuxième matériau avec le premier matériau et ainsi de production de la première couche (5) de la paroi latérale (2) du gobelet et du fond (1) du gobelet.

15. Procédé selon la revendication 14, dans lequel l'étape e) est mise en oeuvre dans une centrifugeuse.

16. Procédé selon l'une quelconque des revendications 14 - 15, dans lequel l'étape c) est mise en oeuvre dans un tunnel de séchage.

17. Procédé de fabrication d'un couvercle selon la revendication 13, dans lequel le procédé correspond au procédé de la fabrication d'un gobelet, comprenant les étapes a) - e) ainsi que cela est défini dans les revendications 14 -16.

18. Procédé de fabrication d'une combinaison à partir d'un gobelet et d'un couvercle, dans lequel le gobelet et le couvercle sont réalisés respectivement soit à partir du matériau de la paroi latérale (2) selon l'une quelconque des revendications 1 - 5 soit à partir du matériau de la paroi latérale (2) selon l'une quelconque des revendications 10 et 11, dans lequel le gobelet et le couvercle sont fabriqués par un procédé de pressage ou un procédé de coulée, de préférence dans lequel le gobelet et le couvercle comprennent du stéarate de magnésium.
